(19) **Europäisches Patentamt / European Patent Office / Office européen des brevets**

(11) **EP 4 034 838 B1**

(12) **EUROPEAN PATENT SPECIFICATION**

(45) Date of publication and mention
of the grant of the patent:
**03.12.2025 Bulletin 2025/49**

(21) Application number: **20870285.2**

(22) Date of filing: **09.09.2020**

(51) International Patent Classification (IPC):
**G05D 1/248** (2024.01) **G05D 1/243** (2024.01)
**B60L 58/12** (2019.01) **B60L 50/60** (2019.01)
**B60L 50/50** (2019.01) **G01C 21/34** (2006.01)
**G01C 21/04** (2006.01) **G05D 105/22** (2024.01)
**G05D 107/17** (2024.01) **G05D 109/10** (2024.01)
**G05D 111/10** (2024.01)

(52) Cooperative Patent Classification (CPC):
**B60L 58/12; G01C 21/3469; G05D 1/243;**
**G05D 1/248;** B60L 2200/30; B60L 2240/62;
B60L 2260/52; G05D 2105/24; G05D 2107/17;
G05D 2109/10; G05D 2111/10

(86) International application number:
**PCT/IL2020/050983**

(87) International publication number:
**WO 2021/059263 (01.04.2021 Gazette 2021/13)**

(54) **NAVIGATION INDICATION OF A VEHICLE**

NAVIGATIONSANZEIGE EINES FAHRZEUGS

INDICATION DE NAVIGATION D'UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.09.2019 IL 26971519**

(43) Date of publication of application:
**03.08.2022 Bulletin 2022/31**

(73) Proprietor: **Seamless Vision (2017) Ltd**
**6248827 Tel Aviv (IL)**

(72) Inventors:
• **NARDIMON, Amir**
**6248827 Tel-Aviv (IL)**

• **WAXMAN, Omer**
**7044563 Gedera (IL)**
• **KOLOMIETS, Pavlo**
**Kiev, 02217 (UA)**

(74) Representative: **Bianchetti & Minoja with
Trevisan & Cuonzo IPS SRL**
**Via Plinio, 63**
**20129 Milano (IT)**

(56) References cited:
EP-A1- 2 527 214     US-A- 5 376 875
US-A- 5 515 283     US-A1- 2003 182 052
US-A1- 2012 109 515     US-A1- 2014 244 159
US-A1- 2017 030 728     US-A1- 2017 314 954
US-B1- 6 199 014     US-B1- 6 317 683
US-B2- 8 798 900

**Description**

**TECHNOLOGICAL FIELD**

The presently disclosed subject matter relates to providing navigation indication of a vehicle, and navigating a vehicle.

**BACKGROUND**

Among existing operating devices are battery-operated devices which are devices that are powered by battery. The battery enables initial operation of the device and its continued operation. The battery can be the exclusive source power of the device, or can be one of several power sources to a device, along with e.g. gas power source and others.

The battery power level of the battery is indicative of how much battery power remains for a certain activity of the device. When considering battery-operated vehicles, that move toward a desired destination, the battery power level of a battery-operated vehicle at any moment is indicative of whether the vehicle can reach the desired destination.

It is therefore desired to monitor the current power level of a battery-operated vehicle.

While considering navigation of vehicles from a certain location to a destination, the most common navigation tool is GPS based. However, in some cases, the GPS tool is not available, e.g. due to low reception of a GPS signal, or is not sufficient for navigating the vehicle, and it is desired to be able to continue to navigate the vehicle.

Vehicle navigation is known from US 2014/244159 A1 and US 2017/314954 A1.

**GENERAL DESCRIPTION**

When considering a battery-operated vehicle, the current battery power level of the battery can be indicative of how much battery power remains for a certain activity of the vehicle. More specifically, when considering a route along which the vehicle is planned to move until reaching its destination, it is important to confirm, in advance, before commencing towards the destination, if the current battery power level of the vehicle's battery is sufficient for enabling the vehicle to operate until reaching its destination. It is therefore important to determine how much battery power consumption is required for the vehicle to reach its destination, and to confirm that the current battery power level of the vehicle is indeed sufficient.

Confirming in advance that a battery-operated vehicle (BOV) has sufficient power level in order to complete a certain operation may be fundamental for some actions. For example, if the battery power of a BOV runs out while it is in operation and moves towards a destination, the BOV stops without reaching the destination. If this happens, a user of the BOV is stuck in the middle of the route without the ability to recharge and continue to the destination (assuming that it neither has a portable charger, nor has access to an external charging device). Considering a specific example of disabled users who are led by a BOV toward a destination, confirming, in advance, that there is sufficient battery power level to reach the destination, is critical. It is therefore important to confirm, in advance, that the current battery power level of the BOV is sufficient for enabling the BOV to reach the required destination, and to provide a suitable indication of the remaining battery power status, in view of the battery power consumption that is required to reach the destination. Moreover, it is also important to continue monitoring the current power level of the vehicle's battery during the operation itself, and to confirm, by providing an indication, that there is still sufficient battery power level to reach the desired destination.

In some cases, determining, in advance, before the vehicle begins its journey, whether there is sufficient remaining battery power of the BOV to reach its destination, includes comparing the current power level of the battery to the battery power consumption that is required to navigate the BOV from its current location to the destination, and to confirm that indeed the current power level is higher. In some cases, determining the battery power consumption that is required to navigate the BOV from the current location to the destination includes obtaining geographic-location related information, such as GPS coordinates, of the current location and the destination, and determining a navigation route to the destination based upon the geographic-location related information. Once a navigation route is determined, it is possible to determine how much battery power consumption is required in order to complete the navigation route, and to determine whether the current power level of the battery is sufficient for completing the navigation route. In some cases, a suitable navigation indication, based on the current power level of the battery compared to the required battery consumption, is provided.

For example, consider an operator of a BOV that wishes to go from his house to a library. In order to determine that his BOV has sufficient battery power consumption to reach the library, it is required to determine a route to the library, and then determine the battery consumption that is required to reach the library. Once the required battery consumption is determined, it is compared to the current battery power of the BOV to determine whether the current battery power is sufficient to reach the library.

When considering the process of the navigation itself, then in order to navigate vehicles from a current location to a destination, geographic-location related information, such as GPS coordinates, is obtained with respect to the current location and the destination. Currently, the most common navigation tool is GPS based, where information from GPS satellites is received at a vehicle in order to calculate the vehicle's geographical position. Using suitable software, the vehicle may display the vehicle's geographical position on a map, as a GPS waypoint, and it may offer directions from the current geographical position to the destination. Receipt of information from GPS satellites in order to calculate the vehicle's geographical position requires GPS reception, i.e., an unobstructed line of sight to several GPS satellites of the network of satellites located in orbit. In certain circumstances, such as in an urban environment, routes that pass tunnels, heavy weather conditions, near high buildings or very dense streets, GPS reception is subject to poor satellite signal conditions, in a manner that does not enable to navigate based on GPS reception. In addition, in certain circumstances, GPS coordinates do not provide sufficient information for navigating a vehicle in an accurate manner, such as in cases of vehicles that navigate on sidewalks, and not on roads. Thus, in accordance with certain embodiments of the presently disclosed subject matter, it is desired to provide a navigation indication also when the GPS signal is not sufficient, and to use other types of geographic-location related information, such as information on the surrounding area, including for example, visual cues in the area, to assist in such navigation.

According to the invention a method is provided according to claim 1, a vehicle is provided according to claim 11, and a computer program product is provided according to claim 15. Preferred embodiments are provided in the dependent claims.

According to an aspect of the presently disclosed subject matter there is provided a method for providing navigation indication of a battery-operated vehicle (BOV) from a first location to a second location, the method comprising, by a computer memory circuitry associated with the BOV:

    a. obtaining data indicative of the first and second locations;
    b. determining data indicative of a battery power consumption that is required to navigate the BOV from the first location to the second location;
    c. obtaining data indicative of a current power level of the battery;
    d. comparing the data indicative of the required battery power consumption to the data indicative of the current power level of the battery for determining remaining battery power status for navigating the BOV from the first location to the second location, and
    e. providing an indication based on the determination.

In addition to the above features, the method according to this aspect of the presently disclosed subject matter can optionally comprise one or more of features (i) to (xxi) listed below, in any technically possible combination or permutation:

    (i) wherein, in response to the comparing of the data, determining an insufficient remaining battery power status, and providing an indication of insufficiency, based on the determination;

    (ii) the method further comprising: generating a signal for disabling operation of the battery-operated BOV;

    (iii) wherein, in response to the comparing of the data, determining a sufficient remaining battery power status, and providing an indication of sufficiency, based on the determination, for facilitating navigation of the BOV to the second location;

    (iv) the method further comprising: generating a signal for enabling navigation operation of the BOV to the second location; and navigating the BOV from the first location to the second location;

    (v) wherein the comparing of the data includes comparing the data indicative of the current power level of the battery to a given threshold corresponding to the data indicative of the required battery power consumption, and determining a sufficient remaining battery power status in response to the current power level of the battery exceeding the given threshold;

    (vi) wherein determining the sufficient remaining battery power status in response to the battery being fully charged;

    (vii) the method further comprising: repeating aforementioned stages (a) to (e) where the first location is a current location of the navigated BOV; and comparing the data indicative of the required battery power consumption to the data indicative of the current power level of the battery for determining the remaining battery power status for navigating the BOV from the current location to the second location;

    (viii) wherein, in response to the comparing of the data, determining an insufficient remaining battery power status, and providing an indication of insufficiency, based on the determination;

(ix) wherein obtaining the data indicative of the first and second locations includes obtaining geographic-location related information associated with the first and second locations, wherein the method further comprises:

determining data indicative of a navigation route from the first location to the second location based on the received information; and

determining the data indicative of the required battery power consumption based on the data indicative of the navigation route;

(x) wherein obtaining the geographic-location related information includes obtaining GPS coordinates associated with the first location and/or the second location;

(xi) wherein obtaining the geographic-location related information includes obtaining one or more visual cues associated with the first location and/or the second location;

(xii) wherein determining the data indicative of the navigation route further comprises obtaining route information including at least one of the following parameters: route terrain data, route data that depends on one or more operator parameters, and one or more route ambient conditions;

(xiii) the method further comprising:

determining a sufficient remaining battery power status, and providing an indication of sufficiency, based on the determination, for facilitating navigation of the BOV to the second location;

generating a signal for enabling navigation operation of the BOV to the second location;

obtaining data indicative of at least one intermediate point on the navigation route between the first and the second locations, the intermediate point being associated with geographic-location related information; and

navigating the BOV from the first location to the second location through the at least one intermediate point;

(xiv) wherein obtaining the data indicative of the at least one intermediate point includes obtaining GPS coordinates associated with the at least one intermediate point, and wherein prior to navigating the BOV from the first location to the second location through the at least one intermediate poin the method further comprising:

selectively filtering out at least some of the obtained GPS coordinates associated with the intermediate point upon determining that at least some of the obtained GPS coordinates are in a forbidden area; and

navigating the BOV from the first location to the second location without the filtered GPS coordinates;

(xv) wherein the selectively filtering out comprises: positioning the obtained GPS coordinates on a map coordinate system; and discarding at least some of the GPS coordinates upon determining that the at least some of the GPS coordinates are positioned in a predefined forbidden part of the map coordinate system;

(xvi) wherein the data indicative of the navigation route includes data indicative of a succession of the at least two intermediate points, wherein each of the at least two intermediate points is associated with corresponding geographic-location related information, and wherein each two successive intermediate points are associated with a corresponding segment of the navigation route, wherein during navigating the BOV from the first location to the second location, the method further comprises:

a) determining data indicative of a segment associated with a first and second intermediate points of the at least two intermediate points;

b) determining data indicative of a direction of the segment from the first intermediate point to the second intermediate point, based on the corresponding geographic-location related information of the at least two intermediate points;

c) obtaining data indicative of local information associated with the determined segment;

d) obtaining local information of a surrounding area; and

e) selectively modifying the data indicative of the navigation route based on the obtained associated local information, the obtained local information of the surrounding area, and the direction of the segment; and

f) navigating the BOV based on the modified navigation route;

(xvii) wherein the first or second intermediate points are identical to the first or second locations, respectively;

(xviii) the method further comprising: repeating aforementioned stages (a) to (f) with respect to at least one different segment, the at least one different segment being associated with at least one different intermediate point than the first and second intermediate points, until reaching the second location;

(xix) wherein the method further comprises configuring the BOV;

(xx) wherein configuring the BOV includes adjusting a handle connected to the BOV;

(xxi) wherein adjusting the BOV includes configuring the speed of the BOV;

According to another aspect of the presently disclosed subject matter there is provided a method for providing navigation indication of a vehicle navigating from a first location to a second location, the method comprising, by a computer memory circuitry associated with the vehicle:

(a) obtaining data indicative of geographic location related information associated with the first and second locations;

(b) determining data indicative of a navigation route from the first location to the second location based on the obtained geographic location related information, wherein the data indicative of the navigation route includes data indicative of a succession of at least two intermediate points, wherein each of the at least two intermediate points is associated with corresponding geographic location related information and wherein each two successive intermediate points are associated with a corresponding segment of the navigation route;

(c) determining data indicative of a segment associated with first and second intermediate points of the at least two intermediate points;

(d) determining data indicative of a direction of the segment from the first intermediate point to the second intermediate point, based on their corresponding geographic location related information;

(e) obtaining data indicative of local information based on the determined direction;

(f) obtaining local information of a surrounding area;

(g) selectively modifying the data indicative of the navigation route based on the obtained data indicative of the local information; and

(h) navigating the vehicle based on the modified navigation route.

According to another aspect of the presently disclosed subject matter there is provided a battery-operated vehicle (BOV), comprising:

a battery configured to provide the source power of the BOV;

at least one processor included in a processing and memory circuitry (PMC) operatively connected to the battery, the at least one processor being configured to:

a. obtain data indicative of a first and a second location;

b. determine data indicative of a battery power consumption that is required to navigate the BOV from the first location to the second location;

c. obtain data indicative of a current power level of the battery;

d. compare the data indicative of the required battery power consumption to the data indicative of the current power level of the battery for determining remaining battery power status for navigating the BOV from the first location to the second location, and

e. provide an indication based on the determination.

According to another aspect of the presently disclosed subject matter there is provided a vehicle, comprising:

at least one camera, configured to capture one or more images of a surrounding area;

a GPS unit configured to obtain GPS coordinates of a location of the vehicle;

at least one processor included in a processing and memory circuitry (PMC) operatively connected to the at least one camera and the GPS unit, the at least one processor is configured to provide navigation indication to a vehicle navigating from a first location to a second location, the at least one processor is configured to:

a) obtain data indicative of geographic location related information associated with the first location using a GPS reading of a GPS unit;

b) obtain data indicative of geographic location related information associated with the second location;

c) determine data indicative of a navigation route from the first location to the second location based on the obtained geographic location related information, wherein the data indicative of the navigation route includes data indicative of a succession of at least two intermediate points, wherein each of the at least two intermediate points is associated with corresponding geographic location related information and wherein each two successive intermediate points are associated with a corresponding segment of the navigation route;

d) determine data indicative of a segment associated with first and second intermediate points of the at least two intermediate points;

e) determine data indicative of a direction of the segment from the first intermediate point to the second intermediate point, based on their corresponding geographic location related information;

f) obtain data indicative of local information based on the determined direction;

g) obtain local information of a surrounding area based on one or more images captured by the at least one camera;

h) selectively modify the data indicative of the navigation route based on the obtained data indicative of the local information; and

i) navigate the vehicle based on the modified navigation route.

According to another aspect of the presently disclosed subject matter there is provided a computer program product comprising a computer readable storage medium retaining program instructions, the program instructions, when read by a processor, cause the processor to perform a method for providing navigation indication of a battery-operated vehicle (BOV) from a first location to a second location, the method comprising:

a. obtaining data indicative of the first and second locations;

b. determining data indicative of a battery power consumption that is required to navigate the BOV from the first location to the second location;

c. obtaining data indicative of a current power level of the battery;

d. comparing the data indicative of the required battery power consumption to the data indicative of the current power level of the battery for determining remaining battery power status for navigating the BOV from the first location to the second location, and

e. providing an indication based on the determination.

According to another aspect of the presently disclosed subject matter there is provided a computer program product comprising a computer readable storage medium retaining program instructions, the program instructions, when read by a processor, cause the processor to perform a method for providing navigation indication of a vehicle navigating from a first location to a second location, the method comprising:

(a) obtaining data indicative of geographic location related information associated with the first and second locations;

(b) determining data indicative of a navigation route from the first location to the second location based on the obtained geographic location related information, wherein the data indicative of the navigation route includes data indicative of a succession of at least two intermediate points, wherein each of the at least two intermediate points is associated with corresponding geographic location related information and wherein each two successive intermediate points are associated with a corresponding segment of the navigation route;

(c) determining data indicative of a segment associated with first and second intermediate points of the at least two intermediate points;

(d) determining data indicative of a direction of the segment from the first intermediate point to the second intermediate point, based on their corresponding geographic location related information;

(e) obtaining data indicative of local information based on the determined direction;

(f) obtaining local information of a surrounding area;

(g) selectively modifying the data indicative of the navigation route based on the obtained data indicative of the local information; and

(h) navigating the vehicle based on the modified navigation route.

In addition, the BOV, vehicle and computer program produce, of the presently disclosed subject matter can optionally comprise one or more of features (i) to (xxi) listed above, mutatis mutandis, in any technically possible combination or permutation.

## BRIEF DESCRIPTION OF THE DRAWINGS

Non-limiting examples of the presently disclosed subject matter, described below with reference to the figures attached hereto, are listed following this paragraph. Identical structures, elements or parts that appear in more than one figure may be labeled with the same numeral in the figures in which they appear. The drawings and descriptions are meant to illuminate and clarify embodiments disclosed herein, and should not be considered limiting in any way.

Fig. **1** is a high level illustration of a battery-operated vehicle (BOV) comprising a navigation device in an urban area, according to an example of the presently disclosed subject matter;

Fig. **2** is a specific illustration of a BOV, according to an example of the presently disclosed subject matter;

Fig. **3** is a block diagram of a BOV including a processor and memory circuitry (PMC), according to an example of the presently disclosed subject matter;

Fig. **4** is a flowchart of operations carried out by PMC, according to an example of the presently disclosed subject matter;

Fig. **5** is a flowchart of operations carried out while determining required battery power consumption, according to an example of the presently disclosed subject matter;

Fig. **6a** is a flowchart of operations carried out while navigating the BOV, according to an example of the presently disclosed subject matter;

Fig. **6b** is one example of visual cues database;

Fig. **7** is an illustration of a modified navigation route, according to an example of the presently disclosed subject matter;

Fig. **8** is an example of some operations executed while configuring BOV according to an example of the presently disclosed subject matter; and

Fig. **9** is a flowchart of operations carried out while providing navigation indication of a vehicle from a first location to a second location according to an example of the presently disclosed subject matter.

## DETAILED DESCRIPTION OF EMBODIMENTS

In the following detailed description, numerous specific details are set forth in order to provide a thorough understanding of the invention. However, it will be understood by those skilled in the art that the presently disclosed subject matter may be practiced without these specific details. In other instances, well-known methods, procedures, components and circuits have not been described in detail so as not to obscure the presently disclosed subject matter.

Unless specifically stated otherwise, as apparent from the following discussions, it is appreciated that throughout the specification discussions utilizing terms such as "obtaining", "determining", "comparing", "providing", "generating", "navigating", "repeating", "comparing", "filtering", "positioning", "discarding", "modifying", "configuring", "adjusting", or the like, refer to the action(s) and/or process(es) of a computer that manipulate and/or transform data into other data, said data represented as physical, such as electronic, quantities and/or said data representing the physical objects. The term "computer" should be expansively construed to cover any kind of hardware-based electronic device with data processing capabilities including, by way of non-limiting example, the processor and memory circuitry **110** disclosed in the present application.

The terms "non-transitory memory" and "non-transitory storage medium" used herein should be expansively construed to cover any volatile or non-volatile computer memory suitable to the presently disclosed subject matter.

It is to be understood that the term "signal" used herein excludes transitory propagating signals, but includes any other signal suitable to the presently disclosed subject matter.

The operations in accordance with the teachings herein may be performed by a computer specially constructed for the purposes or by a general-purpose computer specially configured for the purpose by a computer program stored in a non-transitory computer-readable storage medium.

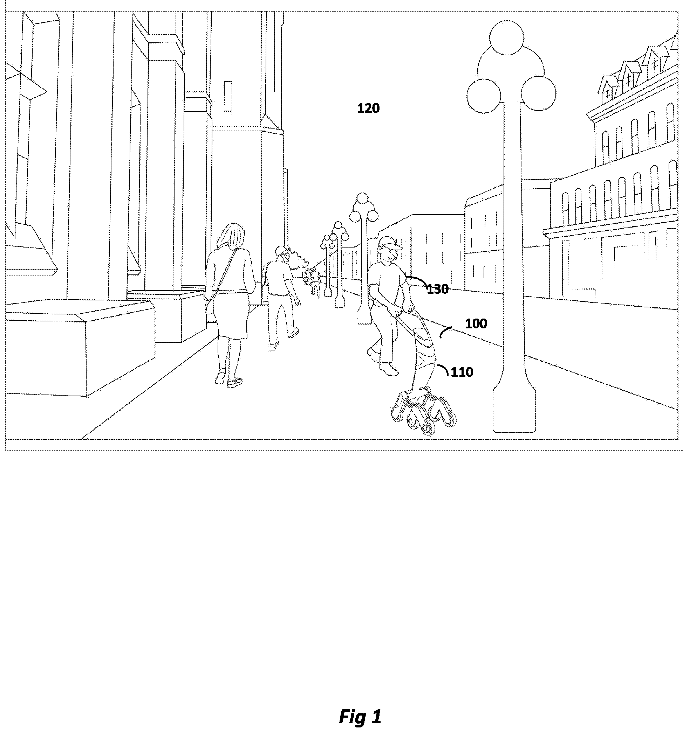

Bearing this in mind, attention is drawn to Fig. **1** showing a high level illustration of a battery-operated vehicle (BOV) in an urban area. It is noted that while the description set forth herein mainly pertains to BOVs, this is done by way of a non-limiting example only, and the principles disclosed with respect to BOVs can be implemented in other types of battery-operated devices, for example handheld devices, smart glasses, wristbands, wheel based canes, care systems, or any other route navigating or obstacle avoidance devices, e-scooters, electric bikes, robotic guides and any other battery-operated devices having navigation capabilities, as described throughout the description.

Assume for example that a BOV is planned to navigate from its current location to a destination. Before the BOV starts to navigate towards the destination, it is desired to determine that the BOV has sufficient battery power to complete this route and reach the destination. Otherwise, the BOV will get stuck on the road. In specific cases where a user is operating BOV, referred to herein as an operator, it is desired to determine that the BOV has sufficient battery power to complete this route before starting the navigation itself and leading the operator. This necessity is even more evident in cases where the user is a person with disabilities, such as blind or visually impaired users. It is therefore advantageous to provide navigation indication of the battery of the BOV, before starting to navigate towards the destination, and to determine if the BOV has sufficient battery power to complete the route. In some cases, the indication is based on calculating the battery power consumption that is required to navigate the BOV from the current location to the destination location and compare it to the current battery power level of the BOV. If the level of the current battery power of the battery is higher than the required battery power, it is determined that there is sufficient battery power to navigate to the destination, and suitable navigation indication can be provided. If, on the other hand, the level of the current battery power of the battery is lower than the required battery power, it is determined that there is insufficient battery power to navigate to the destination.

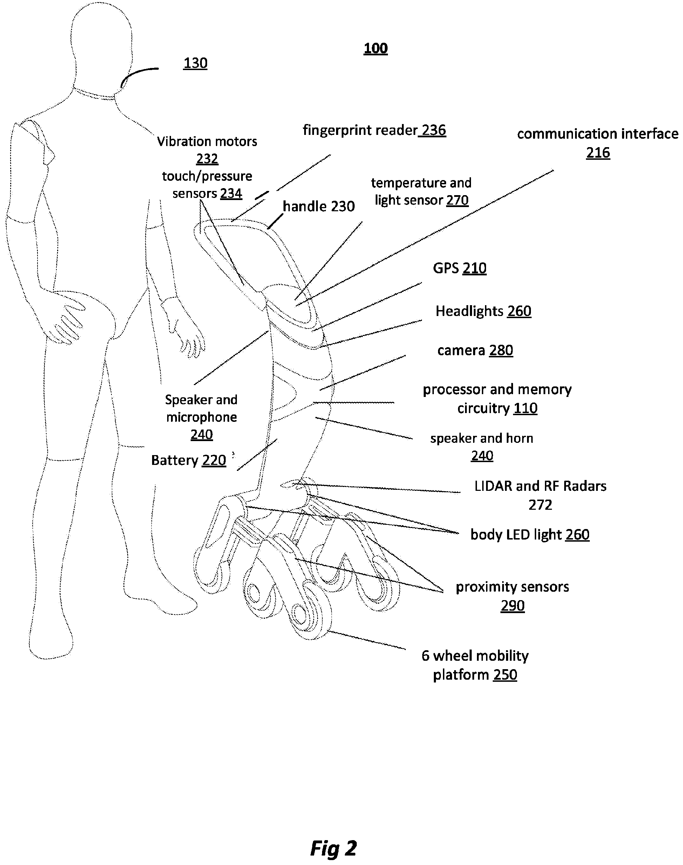

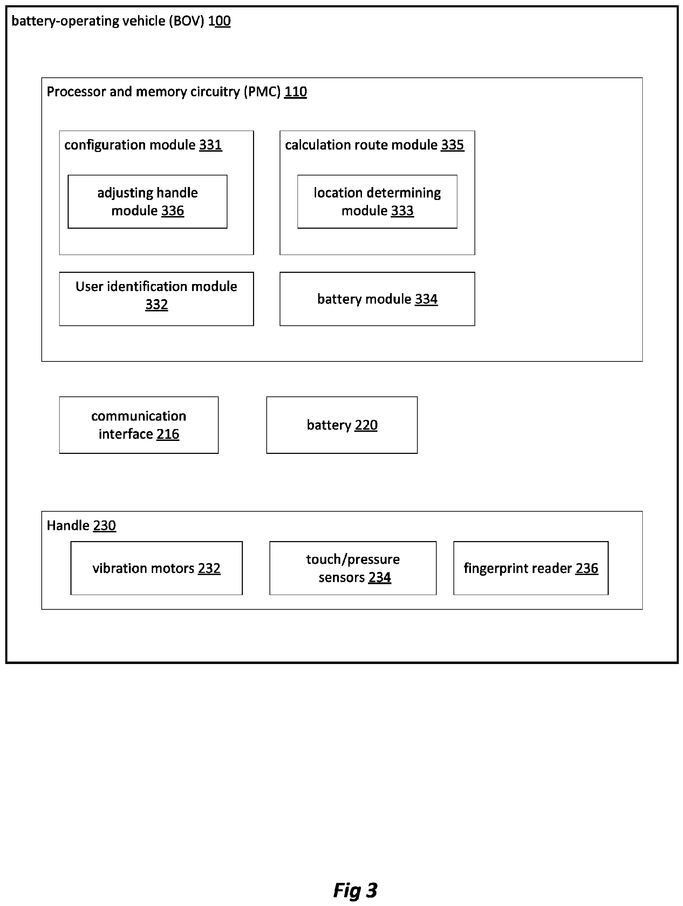

Bearing the above in mind, attention is drawn to Fig. **1** showing a schematic illustration of a battery-operated vehicle (BOV) **100** comprising a processor and memory circuitry (PMC) **110**. PMC **110** is operatively connected to several elements of the BOV **100** as further illustrated below in Figs. **2** and **3** and is configured to provide navigation indication of the BOV **100** from a first location to a second location. In some cases, the navigation indication is related to the power level of the battery as will further be explained below. In some examples, PMC **110** is further configured to control the movement of the BOV **100** and to navigate the BOV **100** to the destination.

Fig. **1** also shows urban area **120** in which the BOV **100** operates and navigates to a destination. Urban area **120** may include streets, buildings, roads, sidewalks and pedestrians (some of which are not shown). As further illustrated in Fig. **1**, the BOV **100** is operated by an operating user **130**, e.g. an operator with disabled vision capabilities, such as visually impaired users. However, this example is non-limiting, and accordingly the BOV **100** may be operated by an operator with vision capabilities, e.g. a tourist that uses the BOV **100** as transportation means in a tourist site. In another example, the BOV **100** moves towards a destination without an operating user, such as a BOV carrying cargo to a destination.

In some examples, the BOV **100** may be configured to move from a first location, e.g. the current location of the BOV **100**, to a second location, e.g. a destination, in urban area **120**. The BOV **100** is operatively connected to PMC **110**, and includes a battery (not shown) which is the source of power of the BOV **100** and enables it to operate. PMC **110** is configured to provide navigation indication of the BOV **100** from the current location to the destination. In some cases, PMC **110** is configured to compare the current battery power of the BOV battery to the battery power consumption that is required to navigate the BOV **100** from the current location to the destination location, to determine if there is sufficient remaining battery power status to navigate the BOV **100** to the destination, and to provide a suitable navigation indication.

The presently disclosed subject matter is not bound to the specific scenarios described with reference to Fig. **1** which are provided for illustrative purposes only.

Attention is drawn to Fig. **2** showing a specific illustration of the BOV **100**, according to an example of the presently disclosed subject matter. As illustrated in Fig. **2**, the BOV **100** is a movable device operated by operator **130**, e.g. by a handle **230**. The BOV **100** includes a body ending with a wheel mobility platform **250**, e.g. a platform with six wheels. Wheel platform **250** can include any number of wheels and is shaped in such a manner that allows the BOV **100** to move on flexible ground conditions, including, for example, moving on uneven surfaces, climbing up and down stairs, passing over tilted surfaces, gravel pavements, sandy areas, etc.

The BOV **100** includes the processor and memory circuitry (PMC) **110** operatively connected to a battery **220**, which provides the power source of the BOV **100**. PMC **110** is configured to provide all processing necessary for operating the BOV **100** as further detailed hereinbelow, and includes a processor (not shown separately) and a memory (not shown separately). The processor of PMC **110** can be configured to execute several functional modules in accordance with computer-readable instructions implemented on a non-transitory computer-readable memory comprised in the PMC **110**.

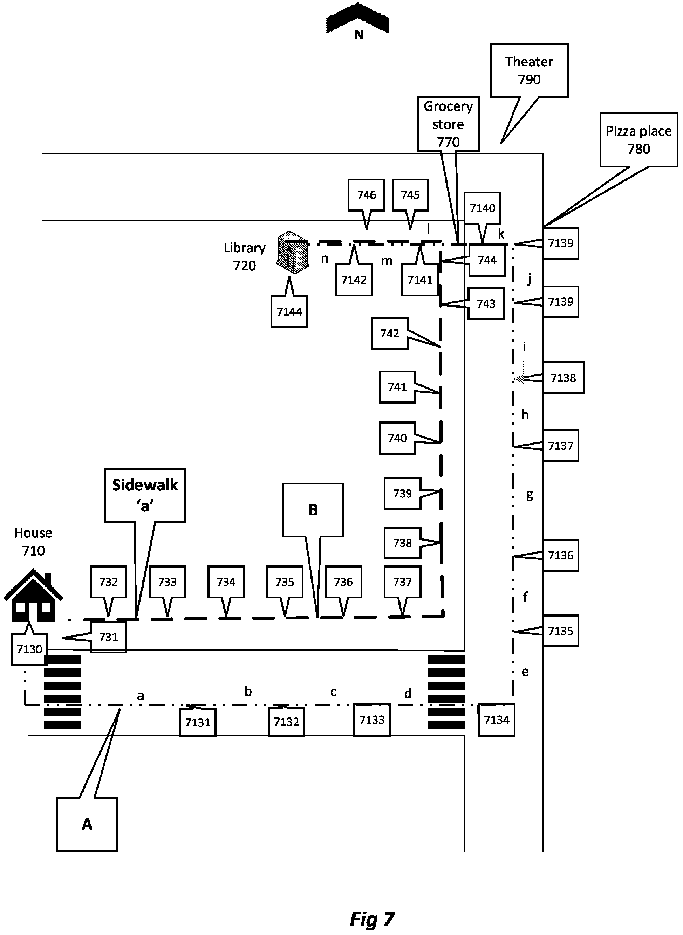

The BOV **100** may also include several sensors such as vibration motors **232**, touch/pressure sensors **234**, fingerprint reader **236**, temperature and light sensor **270**, LIDAR and RF Radars **272**, at least one camera **280**, and proximity sensors **290**. Although some sensors are illustrated in Fig. **2** as connected or placed upon handle **230**, the sensors can instead be operatively connected to handle **230**. The BOV may include additional sensors, not shown in Fig. **2**, such as humidity sensors and accelerometer sensors as described in Fig. **7**. Further details of the sensors are discussed below with respect to Fig. **3**. Also, camera **280** should not be considered as being limited to one camera, and may include one or more cameras capturing one or more images as explained in further detail below.

The BOV **100** may also include communication interface **216** for enabling communication of the BOV **100** with external sources, e.g. by sending and receiving Wi-Fi or Bluetooth or cellular signals or any other communication known to a person versed in the art. Communication interface **216** also enables communication of the PMC **110** with elements of the BOV **100** which are operatively connected to the PMC **110**.

The BOV **100** may also include GPS (Global Positioning System) **210** to lock in positioning coordinates of the BOV **100**, body LED light and headlights **260**, input/output elements such as speakers, microphone and horn, all denoted as **240** in Fig. **2**. Some input/output elements **240**, such as the microphone, are configured to receive input from operator **130**, while other input/output elements **240**, such as horn or microphone, as well as vibration motors **232**, are configured to send operator **130** or the surrounding area (such as other pedestrians in urban area **120** of Fig. **1**) content or some kind of alert in case of a hazard. Further details with respect to these elements are provided below with respect to Fig. **3**.

The shape of the BOV **100**, as illustrated in Fig. **2**, should not be considered as limiting, and any other shapes of the BOV **100**, which enable to provide navigation indication of a battery-operated vehicle, can be used. Furthermore, although elements are illustrated in Fig. **2** as included or connected to the BOV **100**, this illustration is also a specific example and should not be considered as limiting. Some elements, such as PMC **110**, GPS **210**, sensors and other elements can be operatively connected to the BOV **100** and communicate with the BOV **100**, e.g. using communication interface **216**.

Also, those skilled in the art will also readily appreciate that the data repositories can be consolidated or divided in other manners; databases can be shared with other systems or be provided by other systems, including remote third party equipment.

Attention is now drawn to Fig. **3** illustrating a block diagram of the BOV **100,** showing some of the elements of the BOV **100** illustrated in Fig. **2.** The numeral references of elements of the BOV **100** as appearing in Fig. **2** are also applicable to Fig. **3.**

As illustrated in Fig **2,** in some examples, the BOV **100** is operatively connected to the PMC **110** and includes battery **220.** PMC **110** includes a processor (not shown separately), a memory (not shown separately). As will be further detailed with reference to Figs. **2-3,** the processor in the PMC **110** can be configured to execute several functional modules in accordance with computer-readable instructions implemented on a non-transitory computer-readable storage medium. Such functional modules are referred to hereinafter as comprised in the processor. By this example of the presently disclosed subject matter, the processor includes configuration module **331,** user identification module **332,** location determining module **333,** battery module **334,** calculation route module **335,** and adjusting handle module **336** configured to operate the manner described hereinbelow. PMC **110** is comprised or operatively connected to communication interface **216.**

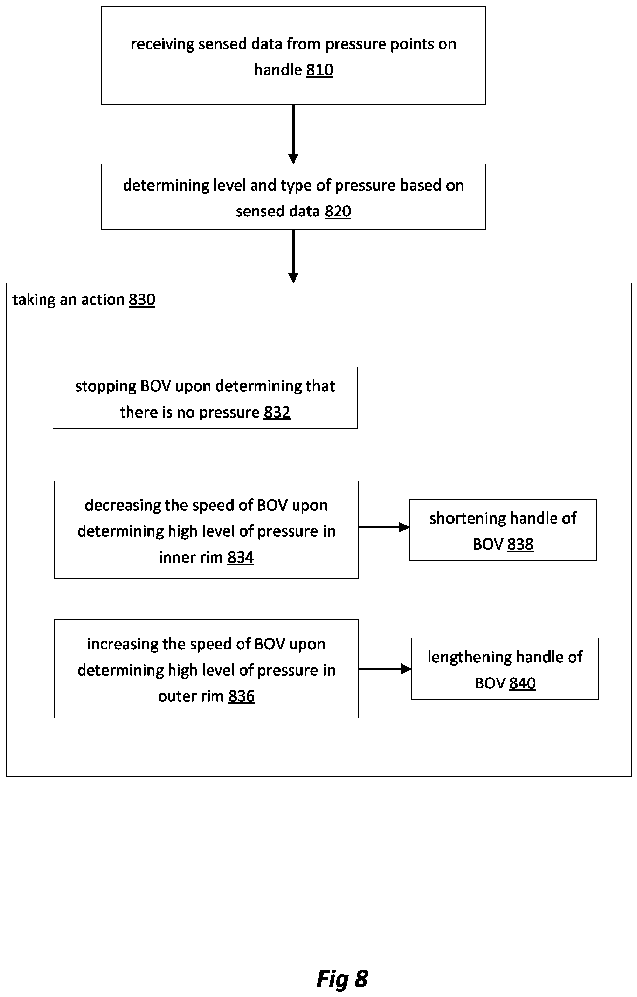

In some examples, once the BOV **100** is turned on, it can be configured e.g. using configuration module **331.** Configuring the BOV **100** can be carried out before the BOV **100** starts moving to its destination, or can be carried out also during the movement itself, while the BOV **100** is navigating. In some examples, configuring the BOV **100** includes configuring any element connected to the BOV **100,** such as configuring the body of BOV **100,** the height, length and angle of handle **230** e.g. using adjusting handle module **336** included in configuration module **331,** turning on/off lights **260,** setting volume of speaker **240,** influencing speed of the BOV **100,** and configuring difference sensors of the BOV **100** etc. Alternatively or additionally, configuring the BOV **100** includes configuring setting properties of the BOV **100** such as setting the destination or setting starting speed or average speed of the BOV **100.** In some cases, configuration module **331** configures the BOV **100** based on parameters of operator **130** who is identified by the BOV **100** (as further described below). Configuring the BOV **100** is further described below with respect to Fig. **8.**

As illustrated in Fig **2,** the BOV **100** is operatively connected to PMC **110** and includes battery **220.** Battery **220** is the power source of the BOV **100** and enables it to operate. In some cases, the battery can be rechargeable, and can also be replaced/changed instead of charged with a different fully charged battery.

In some examples, PMC **110** is configured to provide navigation indication of the BOV **100,** e.g. using battery module **334,** from a first location to a second location, for example, from the current location of the BOV **100** to a destination. Providing the navigation indication is based on comparing the current battery power level of battery **220** to the battery power consumption that is required to navigate the BOV **100** from its current location to its destination. In some examples, if battery module **334** determines that the current battery power level of battery **220** is higher than the required battery power consumption, then battery module **334** is configured to determine a sufficient remaining battery power status, and, in response, provide an indication of sufficiency for facilitating navigation of the BOV **100** to its destination. In some examples, after determining a sufficient remaining battery power status, PMC **110** generates a signal for enabling navigation operation of the BOV to its destination, and navigates the BOV **100** to its destination.

However, if battery module **334** determines that the current battery power level of battery **220** is equal or lower than the required battery power consumption, then battery module **334** is configured to determine an insufficient remaining battery power status, and, in response, provide a respective indication of insufficiency, and optionally PMC **110** generates a signal for disabling operation of the battery-operated BOV.

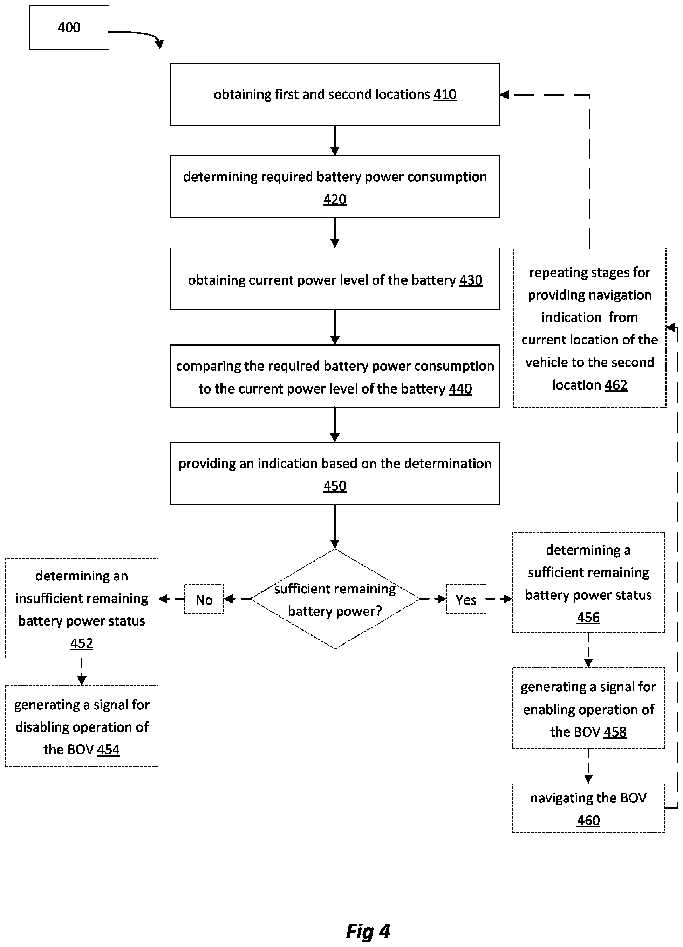

In some examples, in order to determine the battery power consumption that is required to navigate the BOV **100** from the current location to the destination, it is required to determine a navigation route from the first location to the second location based on obtained geographic-location related information, associated with the first and second locations, such as GPS coordinates. In such cases, calculation route module **335** is configured to obtain geographic-location related information associated with the first and second locations, e.g. using location determining module **333** included in calculation route module **335,** and determine data indicative of a navigation route from the first location to the second location based on the obtained geographic-location related information. Once a route is determined, battery module **334** is configured to determine the battery power consumption that is required, based on the determined navigation route. Further details of determining the navigation route, determining battery power consumption that is required to navigate the BOV **100** from the first location to the second location, and providing a navigation indication, are provided below with respect to Figs. **4-6.**

Following are details relating to handle **230** in accordance with certain examples of the presently disclosed subject matter. As exemplified in Figs. **1** and **2,** an operator **130** may operate BOV **100,** e.g. by using handle **230.** Handle **230** is operatively connected to the BOV **100** with movable functionalities, and enables operator **130** to hold BOV **100** when navigating to the destination, and, in some cases, to control it movement, e.g. by moving handle **230.** Some examples of handle **230** are a steering wheel, a handlebar and a joystick.

In some cases, PMC **110** is configured to alert operator **130** in case of a hazard about which he should be notified, e.g. using vibration motors **232** positioned on handle **230.** For example, in case PMC **110** identifies an obstacle on the way that BOV **100** is not able to pass around, or alerting the user that BOV **100** has reached its destination, or that BOV **100** has reached a crosswalk or any other information that is important to the operator based on the current route. Handle **230** also includes touch/pressure sensors **234.** Touch/pressure sensors **234** are configured to sense data from operator **130** in order to configure the BOV **100** and handle **230.** For example, touch/pressure sensors **234** are configured to sense tactile grip force of operator **130** on handle **230** for sensing pressure of the grip of operator **130,** e.g. when operator **130** holds handle **230** by one or two hands. In some examples, based on the sensed pressure level of operator **130** on handle **230,** the speed of the BOV **100** can be adjusted, e.g. by sending signals to PMC **110** to adjust the speed. In addition, operator **130** can be identified by BOV **100** e.g. using fingerprint reader **236** located on handle **230.** In some cases, BOV **100** can be configured based on stored parameters of operator **130,** once identified. Further details of configuring BOV **100** and handle **230** are described below in Fig. **8.**

It should be noted that some elements shown in Figs. **2** and **3** are illustrated as included in the BOV **100,** such as PMC **110,** touch sensors **234** and GPS **210,** however, the disclosure should not be considered as limiting and these elements can be operatively connected to the BOV **100** and can communicate with the BOV **100** e.g. via communication interface **216.** In addition, some elements are illustrated as being located or part of other elements, such as touch sensors **234** and fingerprint reader **236** which are illustrated as being part of handle **230,** but can also be located e.g. on the body of the BOV **100.**

Also, it is noted that the teachings of the presently disclosed subject matter are not bound by the BOV **100** described with reference to Figs. **1-3.** Equivalent and/or modified functionality can be consolidated or divided in another manner and can be implemented in any appropriate combination of software with firmware and/or hardware and executed on a suitable device.

Referring to Fig. **4,** there is illustrated a flow chart of operations carried out by PMC **110,** in accordance with certain embodiments of the presently disclosed subject matter. In some examples, PMC **110** is configured to provide navigation indication of a BOV **100** from a first location to a second location, e.g. from a current location of the BOV **100** to a destination. Although hereinbelow first location is also referred to as current location, and second location is also referred to as destination, this should not be considered as limiting, and a person versed in the art would realize that the description is also applicable to two unspecified locations obtained by BOV **100.** Also, a route can be defined as a roundtrip route, where an operator has to reach from a first location to a destination, and return back. In such cases, the entire route can be defined as a composition of two routes, the first route being from the first location to the destination, and the second route being from the destination to the first location. Navigation indication is then provided for the route to the destination, and a second navigation indication returning back from the destination. Providing navigation indication for each route separately may be advantageous since the route to a destination may require different battery consumption than the route back from the destination, for example, in cases where elevation may differ in each navigation. An uphill direction on the route to the destination requires certain battery consumption, while on the route back, the downhill direction requires different battery consumption.

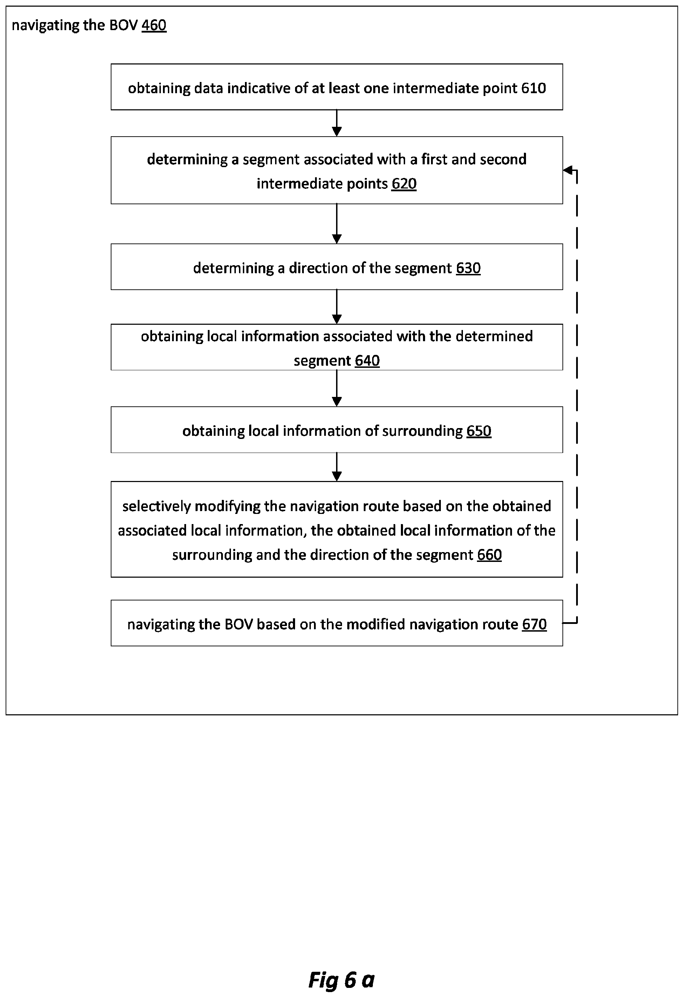

In some cases, the navigation indication from a current location to the destination is provided based on the current power level of battery **220** and the battery power consumption that is required to navigate the BOV **100** from the current location to the destination. Hence, in accordance with certain embodiments of the presently disclosed subject matter, PMC **110** obtains data indicative of the first and second locations (block **410**), e.g. using location determining module **333** illustrated in Fig. **3.** In some examples, the first location is obtained by receiving the current location of BOV **100** using GPS **210** that communicates to location determining module **333** GPS coordinates of the current location of BOV **100.** In some other examples, the first location can be obtained by other means identifying the current location, e.g. based on visual cues obtained from an image of the surrounding area, as captured by camera **280,** and determining the location based on the visual cues. The determination can be done by location determining module **333.** The process of identifying a location based on visual cues is described further below with reference to Fig. **6a.**

In some examples, the second location, i.e. the destination, is received from operator **130** operating the BOV **100,** e.g. in any manner known in the art, including receiving voice commands and converting them to GPS coordinates representing the destination, receiving a typed destination, receiving a destination through a mobile application of operator **130,** etc. In case of visually impaired users, the destination can be received from an external source, e.g. by receiving data indicative of a destination from a remote server that communicates with the BOV **100** and outputting sound data indicative of the destination to be approved (or denied) vocally by the impaired user. In cases where operator **130** is identified (e.g. by using known *per se* face recognition techniques, fingerprint scanner, voice recognition, etc.) by the BOV **110,** and BOV **110** stores configurations/parameters associated with operator **130,** e.g. in a memory associated with PMC **110,** destination can be obtained by retrieving stored data associated with operator **130,** for example, stored favorite destinations. Obtaining the destination can be done e.g. by location determining module **333** illustrated in Fig. **3.**

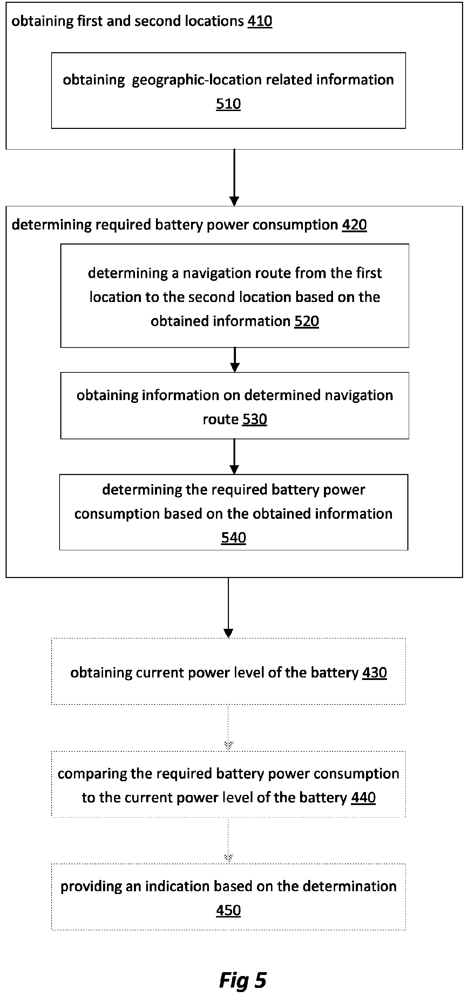

Once data indicative of the first and second locations is obtained, PMC **110** determines data indicative of a battery power consumption that is required to navigate the BOV **100** from the first location to the second location (block **420**). Further details on determining the required battery power consumption are described below in Figs. **5-6.**

PMC **110** further obtains data indicative of a current power level of battery **220** (block **420**), e.g. using battery module **334** illustrated in Fig. **3.**

Once the required battery power consumption is determined, and the current power level of battery **220** is obtained, PMC **110** compares the determined required battery power consumption to the obtained current power level of the battery **220,** for determining remaining battery power status for navigating the BOV **100** from the first location to the second location (block **440).** Then, PMC **110** provides an indication based on the determination (block **450).**

In some examples, the determined battery power consumption that is required to navigate BOV **100** to the destination is presented as a corresponding given threshold. Determining a sufficient remaining battery power status includes comparing the data indicative of the current power level of the battery to the given threshold. Sufficient remaining battery power status is determined in response to the current power level of the battery exceeding the given threshold. In some cases, a sufficient remaining battery power status is determined, in response to the battery being fully charged.

In some cases, if the required battery power consumption is higher than the current power level of the battery **220,** PMC **110** determines an insufficient remaining battery power status (block **452),** and provides an insufficient battery power indication based on the determination. Optionally, PMC **110** generates, in addition, a signal for disabling operation of the BOV **100** (block **454).** In some other cases, if the required battery power consumption is lower than the current power level of the battery **220,** PMC **110** determines a sufficient remaining battery power status (block **456),** and provides an indication of sufficiency based on the determination, for facilitating navigation of the BOV **100** to the second location. Optionally, PMC **110** generates, in addition, a signal for enabling operation of the BOV **100** (block **458).**

In some cases when sufficient remaining battery power status is determined, PMC **110** navigates the BOV **100** from the first location to the second location, e.g. to the selected destination (block **460),** e.g. by providing navigation instructions along the route, in a manner known in the art, such as providing voice navigation instructions. In some examples, during navigation, PMC **110** continues to provide navigation indication with respect to remaining battery **220** by repeatedly performing the stages described above in blocks **410-450** (block **462).** In such an example, PMC **110** continues to obtain data indicative of the current location of the BOV **100,** which is now updated according to the actual location of the BOV **100** and the destination, determines the battery power consumption that is required to navigate BOV **100** from the current location to the destination, obtains the current power level of battery **220,** which is also updated from the beginning of the navigation, and compares the current power level to the required battery power consumption, for determining the remaining battery power status for navigating the BOV **100** from the current location to destination, and provides a suitable indication. In some cases, during navigation, in response to the comparing the required battery consumption to the current power level of battery **220,** PMC **110** determines an insufficient remaining battery power status, meaning, the current battery power level is not sufficient for navigating the BOV **100** from the current location to the destination, and provides an indication reflecting such, based on the determination. In some examples, in such cases, a different action can be taken. For example, a different, closer, destination can be obtained, for navigation of the BOV **100,** or an alert can be provided to operator **130,** e.g. using speaker **240,** that battery **230** is not sufficient for reaching the destination, or, is sufficient for reaching the destination, but not sufficient for riding around the destination as required, or to suggest a charging spot on the route to the destination. In some examples, BOV **100** provides an indication of the time required to charge the battery **230** to obtain the battery consumption level required for reaching the destination.

As will be explained in further detail below, determining the battery power consumption that is required to navigate BOV **100 to** a destination may be based on one or more parameters relating to the route and the operator **130,** such as the route terrain, or the operator average speed. In addition to these parameters, in some cases, it is advantageous to consider also unexpected parameters along the route, which may require battery consumption, and to add a tolerance value depending on the unexpected parameters, to the threshold, representing the battery power consumption that is required to navigate BOV **100** to the destination, before comparing it to the current power level of the battery **220** and determining remaining battery power status for navigating the BOV **100** to the destination. Hence, in some examples, the threshold includes, in addition to the determined required battery power consumption, also a tolerance value. In some examples, unexpected parameters relate to the route itself. For example, a **15%** tolerance may be added in cases where the destination requires some riding around movement of BOV **100,** such as shopping malls, supermarkets, and parks, as opposed to a **5%** tolerance that is added in cases where the destination does not require extra riding around, such as, cinemas, theaters, cafes, restaurants, hospitals, hotels and such. In addition or alternatively, a certain percentage of tolerance can be added per km as the route length gets longer, as it is assumed that an error rate increases when navigating a long route. It should be noted that the above are specific examples and a person versed in the art would consider other examples of unexpected parameters when adding tolerance factors to the threshold.

Reference in now made to Fig. **5** illustrating additional details of the process of determining the battery power consumption that is required to navigate the BOV **100** from the first location to the destination location (block **420** of Fig. **4),** according to examples of the presently disclosed subject matter. It should be noted that the process is not limited to determining remaining battery consumption prior to navigating, but can occur during navigating itself of the BOV **100** from its current location to destination.

In some cases obtaining data indicative of first or second location by PMC **110** (block **410** of Fig. **4)** includes obtaining geographic-location related information associated with the first or second locations (block **510** in Fig. **5).** In some examples, the geographic-location related information of the first or second location comprises GPS coordinates and PMC **110** obtains the GPS coordinates e.g. using GPS **210** illustrated in Fig. **2.**

In some examples, once geographic-location related information is obtained, in order to determine the battery power consumption that is required to navigate the BOV **100** from the first location to the second location, PMC **110** determines data indicative of the navigation route from the first location to the second location based on the received geographic-location related information (block **520**). In cases where the geographic- location related information is GPS coordinates, PMC **110** determines a navigation route between GPS coordinates associated with the first location and the GPS coordinates associated with the second location.

In some examples, determining data indicative of a navigation route from the first location to the second location includes also obtaining route information. PMC **110** obtains the route information e.g. in order to determine the battery power consumption that is required for navigating the route in a more accurate manner (blocks **530** and **540**). The route information relates to various parameters of the navigation route, based on the assumption that the parameters influence the navigation of the BOV **100** e.g. in terms of the average speed of the BOV **100** in the route, and, as a result, influence on the battery consumption that is required to navigate the BOV **100** on the route. The route information includes at least one of the following parameters: route terrain data, route data that depends on one or more operator parameters, and one or more route ambient conditions. The specific types of parameters are further detailed below. In some examples, the parameters of the navigation route can be obtained using known public databases, such as public geographic maps. Alternatively or additionally, the parameters can be obtained using a designated database storing parameters associated with segments of routes. The designated database can constantly be updated with new parameters associated with existing or new segments of routes, after being obtained during navigation. For example, during navigation, sensors operatively connected to BOV **100,** such as altimeter sensors, sense elevation in the surface in a specific segment of the navigated route for a certain length of the segment. The sensed data can be stored as an elevation parameter for the specific segment, and can be used for future navigation, where navigation indication is required for a route that includes that specific segment.

As described above, in addition to determining the required battery consumption based on the parameters, represented as a threshold, a tolerance value can be added to the threshold.

A first type of parameter included in the route information that influences navigation of the BOV **100** relates to route terrain data, such as elevation in the terrain of the navigation route that reduces the speed of the BOV **100,** current traffic and congestion both for cars on roadways, and for pedestrians at specific times of navigation, the average estimated speed of the BOV **100** considering the traffic, the planning of the navigation route e.g. in terms of how many turns or crosswalks it includes (while assuming that the speed of the BOV **100** in turns and crosswalks is lower than average speed), etc. In some examples, the amount of battery consumption that is required to drive around before reaching the destination is also considered when determining the required battery consumption. For example, getting to a destination such as a shopping mall and driving around before stopping at a destination in the shopping mall, requires additional power consumption than entering a theater. As explained above, by way of a non-limiting example, a **15%** tolerance can be determined for destinations which require battery consumption to drive around, such as shopping malls, supermarkets, parks and such, and a **5%** tolerance can be determined for destinations which do not require extra driving around, such as, cinemas, theaters, cafes, restaurants, hotels, and such.

A second type of parameter influencing the navigation of the BOV **100** relates to operator **130.** In cases where operator **130** is identified by the BOV **100,** parameters relating to identified operator **130** can be retrieved from a designated database. The designated database can be stored e.g. in memory associated with PMC **110.** Such parameters include, for example, weight of operator **130,** average speed of identified operator **130,** average speed of operator **130** in the terrain of the navigation route (e.g. in elevations), and average speed of operator **130** at specific hours of the day. A person versed in the art would appreciate that other parameters relating to operator **130** can be stored and retrieved where relevant. Each of the parameters may influence the required battery consumption. For example, an older operator may move slower than a young operator, and hence, if operator **130** is above a certain age, a higher battery consumption will be required.

A third type of parameter influencing the required battery consumption includes any ambient conditions. This may include, for example, the time of day during which the BOV **100** navigates. In case BOV **100** has to navigate in the dark, and lights must be turned on, the battery consumption for navigating to the destination is higher than navigating to the same destination during light hours. Other ambient conditions include heavy weather conditions, e.g. rain or storms, mechanical parameters relating to the BOV **100** and specifically to battery **220,** such as the current life cycle of battery **220,** the weather, temperature, workload and mode of operation of electrically powered components included in BOV **100,** special incidents such as hazards, roadworks or other related obstacles, random number of stops which may be taken along the route, e.g. for a short break on a very hot day. Another example of an ambient condition relates to official rules of the particular country pertaining to the current route, for example, official rules stipulating which side of the road traffic drives on. In some cases, if BOV **100** is operated by an operator **130,** BOV **100** navigates on sidewalks suitable for pedestrians. However, if the determined route includes roadways, which do not have sidewalks, then BOV **100** navigates on the suitable side of the roadway, e.g. in an opposite direction to the direction of traffic on that road. For determining which side of the road should be included in the route, the official rules of a particular country are considered.

In some cases, in order to determine the required battery consumption of the BOV 100 while moving along the selected route, based on one or more of the above parameters, one or more power consuming functions of electrically powered components that are comprised in the BOV **100** are estimated, such as Percentage of Manufacturer's Capacity (PMC) of the battery **230,** wheel-motors included in the wheel mobility platform **250,** sensors **270** and lights **260.** To determine the estimated battery power-consumption required by the BOV **100** to complete the route from its current location to the destination, the battery consumption calculation in the PMC sums the power consumption of each of the BOV **100** electrical power consuming functions, considering the relevant parameters indicated on the route information for each of the electrical power consuming functions. In some cases, power consumption of the BOV **100** main functions, for example, wheel-motors and PMC, are constantly monitored and saved into a log file. The power consumption log file can be analyzed to provide a more accurate estimation of the required battery power consumption of each of the main functions.

To illustrate the above, consider the example of operator **130** that wishes to travel from his house to a library. The route from the house to the library is **2000** meters. Parameters on segments of the route from the house to the library, as obtained from a designated database, indicate that **1500** meters are plain surface and **500** meters are uphill. In addition, day time is evening, which affects the required battery consumption, since e.g. the lights should be turned on. Further to the above, consider also the operator **130** parameters, e.g. that operator **130** is a slow walker uphill and during evening hours.

In order to calculate the battery consumption that is required to reach from the house to the library, the following exemplary calculation is done, based on the following exemplary route or operator parameters:

| Parameter | Value |
|---|---|
| Route Length | **2000**[m] |
| Actual walking length | route length + **15% = 2300**[m] |
| Flat plane walking length | **1500 + 15% = 1725**[m] |
| Up-hill walking length | **500** + **15% = 575**[m] |
| Operator Up-hill avg. speed | **1.1**[m/s] |
| Operator Avg speed (flat plane) | **1.4**[m/s] |
| Day time | Night |

From the derived route and operator parameters, uphill movement, flat plane movement, and idle state durations are determined.

From the derived route and operator parameters, the up-hill movement, flat plane movement, and idle states durations.

$$Flat\ plane\ movement duration = \frac{Flat\ plane\ route\ length}{Flat\ plane\ avg.\ speed} = \frac{1725m}{1.4\left[\frac{m}{s}\right]} = 1,232\ [s]$$

$$Uphill\ movement\ duration = \frac{Uphill\ route\ length}{Uphill\ avg.\ speed} = \frac{575m}{1.1[\frac{m}{s}]} = 523\ [s]$$

The idle state duration (BOV is not moving) is calculated from the total active route duration, and is assumed to be **15%** of the total route duration.

*Idle duration=0.15\* (Uphill movement duration + Flat plane movement duration) =0.15\*(1232+523)=263 [s]*

The total required power consumption to accomplish the desired route is the sum of power consumption of the BOV **100** in each of the operation states multiplied by the state duration.

$$P_{Total}[WHour]$$

$$= \sum_{i=1}^{N} State_i * (State\ system\ power\ consumption$$

$$* state\ duration)$$

To estimate the total BOV **100** power consumption, it is required to calculate the BOV **100** power consumption in each of the states.

The BOV **100** required power consumption is the sum of the BOV **100** required subsystems power consumption. The required power consumption calculation for each of the sub-systems is depicted below. A person versed in the art would realize that the below BOV **100** sub-systems are exemplary only, and that other BOV **100** sub-systems exist and can be taken into consideration when calculating the required power consumption of BOV **100**:

1. Mobility sub-system - the mobility sub-system main power-consuming elements are the wheel motor drivers and wheel motors.

Wheel motors - the wheel motors have a power-consuming curve of power- consumption versus engine load.

Wheel mobility platform **250** includes **6**-wheels and **6** corresponding electrical motors that operates on a **12V** operating voltage. The actual power consumption of the motors can be given in the following table:

| Condition | Current [A] | Power/motor | Power/device |
|---|---|---|---|
| Idle | **0.1** | **12V * 0.1A = 1.2W** | **1.2W * 6 = 7.2W** |
| Flat plane | **0.4** | **12V * 0.4A = 4.8W** | **4.8W * 6 = 27.2W** |
| Uphill | **0.9** | **12V * 0.9A = 10.8W** | **10.8W * 6 = 64.8W** |

Motor drivers - the motor drivers are responsible to deliver enough current from the power supply to the motors. Motor drivers have an efficiency parameter that determines how much power the motor driver consumes. A typical power consumption efficiency parameter is **97%.** To calculate how much power the motor drivers consume, the following formula can be used:

$$Drivers\ power\ consumption = Drivers\ output\ power * \frac{(1 - Power\ efficiency)}{Power\ efficiency}$$

$$Drivers\ output\ power * \frac{0.03}{0.97} = Drivers\ output\ power * 0.031$$

The following table summarizes the mobility sub-system power consumption per BOV **100** state:

| Condition | Motor power | Driver power | Total Power |
|---|---|---|---|
| Idle | **7.2W** | **7.2W * 0.031 = 0.22W** | **7.7.42W** |
| Flat plane | **27.2W** | **27.2W * 0.031 = 0.84W** | **28.04W** |
| Uphill | **64.8W** | **64.8W * 0.031 = 2.01W** | **66.81W** |

2. Computing sub-system - an exemplary processor of PMC **110** is comprised of two processors. The main processor is responsible for all the BOV **100** control, algorithms, sensors data collection, user interface, communication and more. The safety processor is a smaller processor than the main processor and is responsible for safety-related functions and for testing the main processor's behavior. The platform controller is responsible for physical control of the BOV **100,** including motors, lights etc.

Main processor - the main processor during active movement state (flat plane and uphill) operates at almost maximum computing load and maximum power consumption. During idle state when the BOV **100** is not moving, some of the heavy calculations that are related to movement are not operating, causing the computing load and power consumption to decrease.

| Condition | Main processor power |
|---|---|
| Idle | 15W |
| Flat plane | 35W |
| Uphill | 35W |

Safety processor - the safety processor constantly performs critical safety functions. The power consumption of the safety processor is usually constant with the BOV **100** operating state. The safety processor consumes approximately **10W** whenever the BOV **100** is operating in all BOV **100** states.

The following table summarizes the power consumption of the computing sub-system across the different system states:

| Condition | Main processor power | Safety processor power | Total Power |
|---|---|---|---|
| Idle | 15W | 10W | 25W |
| Flat plane | 35W | 10W | 45W |
| Uphill | 35W | 10W | 45W |

3. Sensors' sub-system- the sensors' sub-system constantly consumes power since the sensors are always switched on when the BOV **100** is switched on. The power consumption of the sensors' sub-system is fixed across the different device states. The exemplary power consumption of the sensors' sub-system is depicted in the following table (only some exemplary sensors are illustrated).

| Sensors | Sensor power consumption | Sensors' quantity | Total power |
|---|---|---|---|
| Camera **280** | 5W | 7 | 35W |
| Lidar **272** | 30W | 1 | 30W |
| GPS **210** | 3W | 1 | 3W |
| Total | | | 68W |

4. Headlights Sub-system - the headlights **260** operate during night-time or low-light conditions. The power consumption of the head-light is fixed across all BOV **100** states, and consumes about **12w.**

Power consumption summary: the total power consumption of the BOV **100** in each of the BOV **100** states is summarized in the following table:

| Sub-system | Idle power | Flat-plane Power | Uphill Power |
|---|---|---|---|
| Mobility | 7W | 28W | 67W |
| Computing | 25W | 45W | 45W |
| Sensors | 68W | 68W | 68W |
| Headlights | 12W | 12W | 12W |
| **Total** | **112W** | **153W** | **192W** |

In order to estimate the battery power that is required to successfully complete the selected route, the continuous power consumption per BOV **100** state is multiplied by the state duration, as described above.

| State | State power consumption | State duration | State total |
|---|---|---|---|
| Idle | 112W | 0.07Hour | 7.84Watt*Hour |
| Flat-plane driving | 153W | 0.34Hour | 52.36Watt*Hour |
| Uphill driving | 192W | 0.15Hour | 27.90Watt*Hour |

(continued)

| State | State power consumption | State duration | State total |
|---|---|---|---|
| Battery power consumption required to complete the route | | | 88.10 Watt*Hour |

It should be noted that the above is a specific non-limiting example, and power consumption of other elements, such as motors or sensors, or other elements or factors, can be taken into consideration when estimating the required battery consumption. For example, a tolerance of **5%** can be determined for parameters depending on operator **130,** and another general tolerance of **10%** for the entire route can be added to the estimation.

In some examples, the above estimations are stored in a designated database, such as in memory associated with the PMC **110,** with data relating to the route on which they were estimated, and can be used in future estimations for similar or identical routes, or segments of the route, in order to be more precise with respect to calculation of each element's power consumption.

Referring back to Fig. **5,** once the required battery power consumption is determined (block **540),** the process continues as illustrated above with respect to Fig. **4** to obtain the current power level of battery **220** (block **430),** compare the required battery power consumption to the current power level of the battery **220** (block **440),** and provide an indication based on the determination (block **450).**

The above relates to providing navigation indication from a first location to a second location with reference to the required battery consumption, compared to the current power level of the battery, before starting navigation itself, of the BOV **100.** As illustrated, in some cases, providing the navigation indication is based on GPS coordinates. As opposed to providing navigation indication before starting to navigate, where GPS coordinates are sufficient for determining a navigation route, during the navigating itself, it may advantageous to take into account other types of geographic-location related information, as will be explained below, for navigating to the destination. The following pertains to processes occurring during the navigation itself of the BOV **100,** from the first location to the second location.

As known in the field of navigation, navigation follows a route that is built between two locations, based on their GPS coordinates. A route is defined as a succession of two or more intermediate points (which may also be referred to as waypoints). To follow such a route, it is required to navigate to the nearest waypoint, then to the next one in turn, until a destination is reached. As explained above, in some cases, it may be advantageous to take into account other types of geographic-location related information for navigating to a destination, in addition to, or instead of, reading and following GPS coordinates. For example, this may apply in cases where the GPS signal is lost. Another reason for using other types of geographic- location related information for navigating the BOV **100** is that the current navigation databases, based on which a navigation route is built, include routes which are based on the GPS points collected from the middle of roads or passing buildings, and are intended more for vehicle navigation rather than sidewalk device navigation, such as BOV **100.** While such an inaccurate navigation route can be sufficient when navigating a vehicle on the roads, as the navigation route is indicative of a direction, and an operator who has vision, sufficient information to drive on a road is obtained. Such a navigation route is however insufficient for pedestrians to navigate on sidewalks or trails, that suit only pedestrians and are led by BOV **100.** The necessity of a pedestrian route is even more enhanced in cases where the BOV **100** leads visually impaired operators along the determined navigation route, or in cases where the BOV **100** navigates without an operator.

Moreover, navigation based on GPS coordinates to a desired destination ends with navigation to the surrounding area of destination, and not to the particular destination that is required. For example, consider the above example of an operator reaching a library, navigating, based on GPS coordinates, may end in front of the library building, perhaps on the other side of the road, while an operator has to figure out himself where exactly the building is, and where the exact entrance is located that is suitable for pedestrians. In such cases, navigating based on more than one geographic-location related information type, such as visual cues, enables the operator to reach the front entrance of the library. This advantage is once again enhanced with visually impaired users who need direct assistance to reach the entrance, and not just to the front of the library building. Another example involves navigating to a complex e.g. a theater. Consider a case where an operator wishes to meet a friend next to the fountain in the entrance of **that** theater. Known **GPS** navigation services do not consider the fountain to be a different destination than the theatre. Hence, using navigation based on GPS coordinates, will bring an operator to the area of the theater, but will not navigate the operator to the exact location of the fountain. On the other hand, navigation based on other types of geographic-location related information-cues can bring the operator to the fountain itself. Hence, it may be advantageous to take into account other types of geographic-location related information for navigating to the destination.

As illustrated in Fig. **4,** in some cases, upon determining a sufficient remaining battery power status, a signal is generated for enabling operation of the BOV **100** and the BOV 100 is navigated to the second location (blocks **456, 458** and **460).**

Attention is now drawn to Fig. **6a** illustrating a flowchart of operations carried out while navigating a BOV **100** from the first location to the second location (block **460** in Fig. **4).**

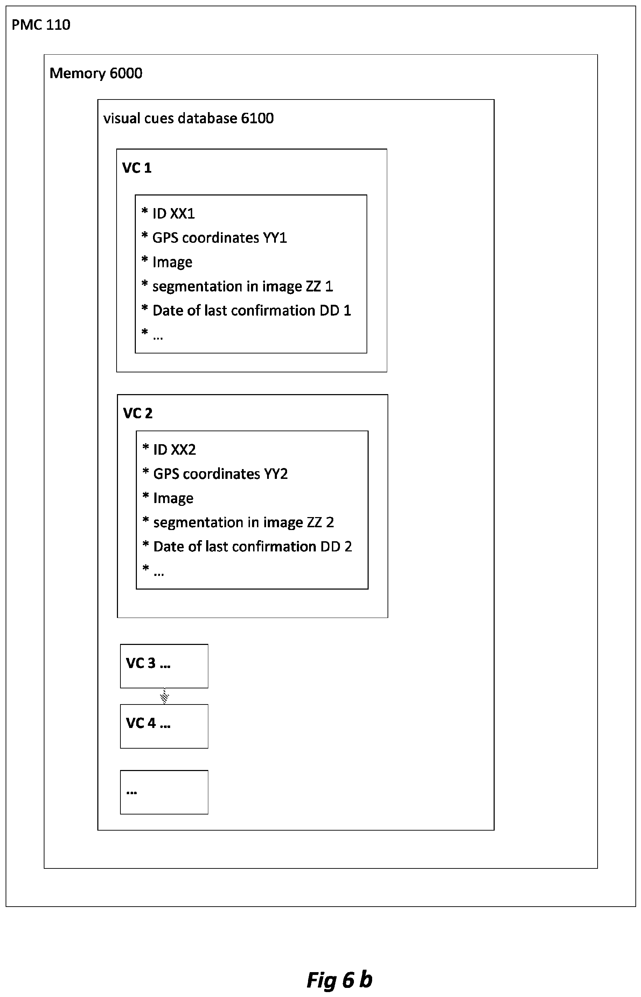

In some cases obtaining data indicative of first or second location by PMC **110** (block **410** of Fig. **4)** includes obtaining geographic-location related information associated with the first or second locations (illustrated as block **510** in Fig. **5**). As explained, In some examples, the geographic-location related information of the first or second location comprises GPS coordinates and PMC **110** obtains the GPS coordinates e.g. using GPS **210** illustrated in Fig. **2. In** addition, in some cases, the geographic-location related information includes one or more visual cues associated with the first or second location. Visual cues (also referred to as "local information") can be any distinctive element in a surrounding environment, e.g. in an urban environment, which can be visually identified, such as buildings, sidewalks, traffic signs, benches, trees, street signs, advertising signs, number on houses, unique geometrical shapes such as statues, chairs, fountains, street graphics, special signs drawn on the sidewalk, special elements of the sidewalk, a lamp, a street light, family names in driveway, mailboxes, doors, special architecture of a building or on a building, the color of a building, the color of a special sign, a hazard sign, police tape, monuments, bridges, or a combination thereof. In some examples, PMC **110** obtains one or more visual cues e.g. using camera **280**. Camera **280** is configured to capture one or more images of the surrounding environment. Alternatively or additionally, one or more images of the current location can be received by PMC **110** using communication interface **216,** e.g. from operator **130.** Using known image processing methods, visual cues can be extracted from the captured/received image. For example, a street sign can be extracted from the image. Once one or more visual cues are extracted, a search in a designated visual cues database (illustrated below with respect to Fig. **6b)** is conducted in order to find a match to a stored visual cue, or a combination of cues. In some cases, the search in the designated database is made based on the corresponding GPS coordinates of the location of the obtained image. For example, GPS coordinates are obtained for the current location of BOV **100.** In addition, an image is captured and a visual cue of a street sign is extracted from the captured image. Based on the obtained GPS coordinates, a search in the designated database is made for all visual cues that have corresponding GPS coordinates, that reside in the surrounding area of the obtained GPS coordinates of the current location of BOV **100.** Among those visual cues which have corresponding GPS coordinates, a search for a match to the street sign is made. Further details of how to find a match are detailed below with respect to block **660.** Once a match is found between the visual cue or a combination of cues from the captured image and the stored visual cues, information on the visual cue can be extracted from the designated visual cues database. The information can be indicative of the accurate location of BOV **100.** For example, if a match to the street sign is found in the designated database, information on the street sign can be retrieved. For example, the side of the street at which this street sign is located can be retrieved (for example, that the street sign is located on the side of the even numbers of the street). The side of the street of the street sign can be indicative of the exact location of the BOV **100** in the street, i.e., that the BOV **100** is located on the side of the even numbers of the street.

It should be noted that obtained GPS coordinates of the current location of BOV 100 may be indicative of the global location of the BOV **100** in the surrounding area in the street. However, the information obtained based on the visual cues may be indicative of a more accurate location of the BOV **100** in the surrounding area, for example, at which side of the street the BOV **100** is located, or if the BOV **100** is located on a sidewalk (in case the sidewalk is also an identified visual cue). The accurate location of the BOV **100** may assist in navigating the BOV **100,** e.g. to navigate on sidewalks only. Obtaining information based on captured or received images can be done, e.g. by location determining module **333** illustrated in Fig. **3.**

Reference is now made to Fig. **6b** illustrating an exemplary visual cues database **6100** - stored e.g. in memory **6000** associated with PMC **110** of Fig. **1.** Visual cues database **6100** includes one or more records, each record being associated with a visual cue or a combination of visual cues (VC**1**, VC**2**,..). As mentioned above, visual cues can be any distinctive element in a surrounding area. A record of a visual cue is identified by a VC ID and may include additional data of the visual cue such as the GPS location of each visual cue, an image of the visual cue, the date and time the visual cue was stored in the visual cues database, dimension of the visual cue, segmentation details within the image of the visual cue, name, color and texture of the visual cue, which side of the sidewalk the visual cue is on, whether the visual cue is visible during the day/night/during certain periods of the year, etc. As mentioned above, The additional data of a visual cue may provide a more accurate location of BOV **100,** such as the side of the street that this visual cue is located. In addition, in some examples, the additional data of the visual cue may assist in determining the reliability and relevance of the stored visual cue. For example, if the record of the visual cue includes an image that is associated with the visual cue, then the date that the image was captured can be indicative of the appearance of the visual cue in reality. If the image was captured only a short time previously, it is most likely that the visual cue exists and should be visually appear in reality in similar manner to that of the image.

As explained above, in order to obtain a first and/or a second location, visual cues can be extracted from an obtained image. The extracted visual cues can be searched for a match in the visual cues database **6100.** In some examples, a search in the visual cues database **6100** is made based on the corresponding GPS coordinates of the first and/or second location, respectively, meaning a search in the visual cues database **6100** is made for all visual cues that have corresponding GPS coordinates, that reside in the surrounding area of the obtained GPS coordinates of the first and/or second location. Among those visual cues which have corresponding GPS coordinates, a search for a match to the extracted visual cue is made. In some cases, the visual cues database **6100** can selectively be updated with new visual cues being added, or with additional information to existing visual cues, based on data collected over time, e.g. by BOV 100 navigating the area and capturing images.

Referring back to Fig. **6a,** in some cases, in order to navigate a BOV **100** on route to a second location, geographic-location related information of different types can be used. For example, GPS coordinates associated with the first location, the second location and intermediate points between the first location and the second location, can be obtained. In addition, local information, such as visual cues, can be obtained and used to navigate from a certain intermediate point to the next intermediate point.

Hence, in some cases, after PMC **110** obtains geographic-location related information on the first and second locations such as GPS coordinates associated with the first and second locations (block **410 and 510** in Figs. **4 and 5),** PMC **110** obtains data indicative of at least one intermediate point on a navigation route between the first and the second locations (block **610**). In some examples, the data indicative of the intermediate point includes geographic-location related information, such as GPS coordinates associated with the intermediate points. In some examples, the navigation route includes more than one intermediate point. In such examples, data indicative of the navigation route includes data indicative of a succession of at least two intermediate points, wherein each of the at least two intermediate points is associated with corresponding geographic-location related information, such as GPS coordinates, and wherein each two successive intermediate points are associated with a corresponding segment of the navigation route. In some examples, each of the first and second locations are considered as an intermediate point for the purpose of determining a segment, such that a segment can be determined between the first location and an intermediate location, or between an intermediate location and the second location.

In some examples, PMC **110** constantly obtains geographic-location related information, for example, PMC **110** constantly reads GPS points, comprised of GPS coordinates, from the GPS system, e.g. using GPS **210** of Fig. **2.** Constant reading can be performed while BOV **100** is not moving and/or when BOV **100** moves during navigation to its destination. Constant GPS reading is performed in order to determine the current location of BOV **100** along the determined route. Each GPS reading has a certain level of accuracy which is dependent, among others, on the number of satellites that are available with good reception at that particular moment. Some of the obtained GPS points may be of low accuracy, reaching **10**s of meters. In some examples, GPS points that have been read by PMC **110** are located in areas across which BOV **100** is not expected to navigate. Such areas include e.g. specific buildings and roads, and are referred to as forbidden areas.

In order to avoid GPS points that fall in forbidden areas, in some cases, a static map is built, on which forbidden areas are pre-mapped and marked. For example, all roads are marked as forbidden areas besides crossing points, and roads where a curbside is not available, buildings under covered areas such as tunnels, and other places where the likelihood of the BOV **100** to be located is very low.

Once data indicative of at least one intermediate point is obtained (block 610), such as GPS coordinates associated with an intermediate point, PMC **110** selectively filters out at least some of the obtained GPS coordinates associated with the intermediate point and navigates the BOV **100** from the first location to the second location from the current location to the second location, without the filtered GPS coordinates.

Filtering out can be done e.g. by positioning the obtained GPS coordinates on a map coordinate system, such as the static map above, and discarding at least some of the GPS coordinates upon determining that at least some of the GPS coordinates are positioned in a predefined forbidden part of the map coordinate system. In some examples, defining a forbidden part of a map can be done manually by marking forbidden areas on a map.

In some examples, after filtering one or more GPS coordinates, PMC **110** can operate in one of the following options: wait for the next reading of GPS coordinates until confirming that the obtained GPS coordinates fall within areas which are not forbidden, and then continue navigating the BOV **100** based on the next reading of GPS coordinates, search for other type of geographic-location related information, such as visual cues, and navigate using them, as will be described in detail below.

Referring back to Fig. **6a,** once data indicative of at least one intermediate point is obtained, PMC **110** determines data indicative of a segment associated with first and second intermediate points of the at least two intermediate points, based on the corresponding geographic-location related information of the at least two intermediate points (block **620**). The segment represents a route from the first intermediate point to the second intermediate point. For example, a segment can be determined based on two GPS coordinates associated with intermediate points. Once a segment is determined, PMC **110** determines data indicative of a direction of the segment, based on the corresponding geographic-location related information of the at least two intermediate points (block **630**). For example, a direction between two GPS coordinates associated with two intermediate points can be indicated by cardinal/intercardinal directions.

In some cases, based on the determined segment, PMC **110** obtains local information associated with the determined segment (block **640**). For example, PMC **110** retrieves from visual cues database **6100** data indicative of visual cues that are associated with the determined segment, e.g. by retrieving one or more visual cues having corresponding GPS coordinates that reside in the surrounding area of the obtained GPS coordinates of the segment. GPS coordinates of the segment can be referred to as GPS coordinates that reside along the segment between the intermediate points that are associated with the segment. Alternatively or additionally, the visual cues stored in the visual cues database are pre-fetched to predefined segments. In such cases, once a segment is determined, the visual cues that were pre-fetched to that segment are retrieved.

Once local information is obtained, e.g. by retrieving visual cues associated with the segment from visual cues database **6100,** each segment is associated with the list of one or more visual cues, each visual cue being associated with GPS coordinates. In some cases, the additional data of one or more retrieved visual cues also includes respective images of the visual cues, optionally, with similar conditions to the conditions that the BOV **100** is currently navigating in terms of light, date and other parameters.

At block **650,** PMC **110** further obtains local information of the surrounding area, e.g. by capturing one or more images of the surrounding area by at least one camera **280** illustrated in Fig. **2.** Using known image processing methods, the captured images are processed, e.g. by PMC **110** and objects appearing in the captured images are constantly extracted and classified. For example, some classes of the objects include people, roads, trees and visual cues. Once visual cues on the surrounding area are classified from the obtained images, the visual cues, along with the obtained associated local information from visual database **6100** and the direction of the segment, can be used to selectively modify the data indicative of the navigation route, as described below.

At block **660,** PMC **110** selectively modifies the data indicative of the navigation route based on the obtained associated local information, the obtained local information of the surrounding area, and the direction of the segment. In order to do so, PMC **110** repeatedly executes the following process:

PMC **110,** e.g. using location determining module **333,** compares a visual cue extracted from one or more captured image to visual cues retrieved from visual cues database **6100** in order to find a match. In some examples, PMC **110** obtains a current GPS reading of the current location of BOV **100.** The GPS coordinates of the current reading are similar to the GPS coordinates of the captured image (as it was taken at the same location, or very close to it). PMC **110** then compares the visual cue extracted from the captured image to visual cues stored in visual cues database **6100** having GPS coordinates that are closest to the coordinates in the current GPS reading in order to find a match. Alternatively or additionally, PMC **110** compares the visual cue extracted from the captured image to visual cues that are expected to be seeable from the current location, e.g. since their corresponding GPS coordinates indicate that they are located close to the current location, and based on calculation of the direction of the segment and the speed of BOV **100** from the last match that was found, the visual cues are expected to be viewable. In some examples, a trained Siamese network deep learning network can be used to find a match between the stored visual cues and visual cues extracted from the surrounding area.

Once a match to a stored visual cue is found, the stored visual cue can be retrieved from the visual cues database **6100** and the additional data associated with the matching visual cues can assist in determining the location of BOV **100** more accurately and provide navigation indication of BOV **100** to the destination.

In some examples, before searching for a match, the stored visual cues that are associated with a specific segment, can assist in obtaining local information of the surrounding area. In such examples, the stored visual cues that are associated with the segment are run through an algorithm, such as a trained fully convolutional network (FCN) algorithm, which outputs the probability of the classes within the stored visual cues. Alternatively, the additional data associated with the stored visual cue includes an indication of the class of the visual cue. In addition, the captured image is run through an algorithm, such as a trained fully convolutional network (FCN) algorithm, which outputs the probability of the classes within the captured image. If the classes are similar to classes of the visual cues retrieved from the visual cues database **6100,** an object detection algorithm, such as Faster R-CNN algorithm or YOLO, can be run, to indicate the spatial location of each class. An instance segmentation algorithm, such as Mask R-CNN algorithm, is then executed to differentiate between the classes in a captured image. A match between segments of the captured image, representing extracted visual cues, and visual cues retrieved from visual cues database **6100** is then conducted.

Optionally, visual cues database **6100** can be updated with data obtained from the captured image. For example, visual cues database **6100** can be updated to include one or more visual cues extracted from captured images, with additional data associated with the extracted visual cues, such as the GPS coordinates, the class of the visual cue, or the captured image. Alternatively, visual cues database **6100** can be updated by updating the additional data associated with one or more visual cues, based on data obtained from the captured image.

In some examples, when searching for a match between visual cues extracted from captured images and retrieved visual cues that are associated with a segment, one or more retrieved visual cues can be ignored, such as visual cues that are visible only at certain times of the day e.g. a neon sign which turns on only during the night, a screen which presents ads only at nighttime, a house number sign which is only visible during the day but has no light and cannot be seen during the night, a bar which is open only during the night and closed during the day may look different as it closes it curtains \has a roll-down screen door and vice versa, such as businesses which are closed during the night, but are open during the day.

As mentioned above, the process of matching between visual cues, as described with respect to visual cues associated with a segment, can also be applied when obtaining the first/second location of BOV **100** (block **410)** based on geographic-location related information of visual cues type.

At block **660,** if a match has been found between a visual cue classified from captured image and a retrieved visual cue, the additional data associated with the retrieved visual cue can assist in determining the location of BOV **100** more accurately. In addition, data indicative of the navigation route of BOV **100** can selectively be modified based on the additional data associated with the matching visual cue and the direction of the segment. For example, if a match has been found to a stored visual cue, the side of the road of the stored visual cue can be indicative of the exact location of BOV **100,** which was previously unknown based on reading of GPS coordinates of BOV **100.** Based on the side of the road, the sidewalk that BOV **100** should navigate on to the destination can be determined. In some cases, once the side of the road is obtained, additional visual cues that are associated with the segment, and that are located on the other side of the road, can be discarded from future searches for matches, and the visual cues that are associated with the segment and those which are located on the same side of the road, where the matching visual cue is located, are searched.

In some cases, where a match is found between more than one visual cue extracted from images of the surrounding area, and more than one stored visual cue, a location function may use the visual cues (up to **3** visual cues) to triangulate and define the current exact location of the BOV **100,** e.g. based on the distance from the matching visual cues. In some examples, such as if a match was found to between more than three **3** visual cues, some visual cues are selected based on one or more parameters, such as closest distance to the visual cue, (visual cues that are in a range from the BOV **100** such that the BOV **100** sensors can accurately measure the distance to the visual cue) and last time each visual cue was identified (based on additional data of the retrieved visual cue), as visual cues that have been identified a short time previously, may be preferred.

Selectively modifying the navigation route (block **660**) can be done e.g., by modifying at least one portion of the navigation route.

For example, if the navigation route based on the GPS coordinates from the first location to the second location, passes a middle of a road, the navigation route can selectively be modified, to pass only safe paths for pedestrians, such as sidewalks, based on matching with visual cues stored in visual cues database **6100,** and which are located on a certain side of the road. Another example of modifying at least one portion of the navigation route is a navigation route that ends at the destination area, but does not include strolling around. For example, an operator **130** reaches the front of the library based on the GPS coordinates, but has to navigate to the entrance door of the library. In order to navigate BOV **100** to the entrance of the library, the navigation route can be modified based on a match between stored visual cues of the library area and visual cues captured by BOV **100** in the surrounding area of the library, in a similar manner to that described above, and can include a navigation route to the library entrance door.

It should be noted that modification of the route is based also on the direction of the segment, such that the operator **130** will eventually reach the desired destination based on the determined direction.

At block **670,** PMC **100** navigates the BOV based on the modified navigation route.

To illustrate the above, by way of example only, reference is now made to Fig. **7** illustrating a modified navigation route, according to an example of the presently disclosed subject matter. Consider the example of an operator that wishes to travel from his house denoted as **710,** to a library, denoted as **720.** The north direction is also denoted in Fig. **7.** Operator turns on the BOV **100,** inserts library **720** as a destination, in a manner that was described above and as known in the art. PMC **110** obtains data on the current location of PMC **110,** i.e. operator's house **710,** and the library destination **720,** e.g. by obtaining GPS coordinates associated with the house **710** and the library **720** (denoted by **7130** and **7244** respectively). In order to determine a route, PMC **110** obtains data indicative of at least one intermediate point between house **710** (GPS coordinate **7130),** and library **720** (GPS coordinate **7144).** Some intermediate points are illustrated in Fig. **7 as 7130-7144.** A navigation route, denoted by 'A', passes intermediate points **7130-7144** and is marked by a dashed line with **2** dots. Route A represents a route determined based on GPS coordinates between the house **710** and library **720.** PMC **110** starts navigating based on route A. As explained above, during navigation, PMC **110** constantly obtains GPS points comprised of GPS coordinates in order to determine the current location of BOV **100** and to navigate BOV **100** along the route. Since some GPS points are determined in a manner that was described above, to fall in forbidden areas, across which BOV **100** is not expected to navigate, e.g. middle of roads, PMC **110** may filter out at least some of the obtained forbidden GPS coordinates.

Segments a, b,..n are determined between each two intermediate nodes **7130** and **7144,** respectively, such that segment a is determined between intermediate nodes **7130** and **7131,** segment b is determined between intermediate nodes **7131** and **7132,** and so forth. The direction of each segment a, b,..n is also determined. For example, the direction of a is east.

As explained, in some examples, while navigating, it is advantageous to obtain additional geographic-location related information, such as visual cues, in order to selectively modify the determined navigation route, by modifying at least a part of the navigation route. Hence, PMC **110** obtains from the visual cues database **6100** local information associated with each segment a, b,..n by retrieving visual cues associated with each segment a, b,..n. For example, PMC **110** obtains visual cues associated with segment 'a' and retrieves sidewalk 'a' from visual cues database **6100.** In addition, PMC **110** obtains local information of the surrounding area by receiving captured images from camera **280.** The captured image includes a sidewalk. Comparing retrieved visual cue sidewalk 'a' and extracted visual cue sidewalk from the captured image, PMC **110** determines a match and retrieves additional data associated with stored sidewalk 'a' from visual cues database **6100.**

Considering the direction of segment 'a' which is east, PMC **110** selectively modifies route A to start on sidewalk 'a' and provides a navigation indication in the direction of segment 'a'. Along the navigation, PMC **110** continues to obtain visual cues on each segment and selectively modifies the navigation route A accordingly. The modified route is denoted in Fig. **7** as navigation route B.

Attention is now drawn to points of interest, grocery store **770,** pizza place **780** and theater **790** illustrating another example of modifying navigation route A to B in Fig. **7.** All three points of interest are located in segment 'k' between intermediate points **7139 and 7140.** While obtaining information on segment 'k', PMC **110** obtains a list of visual cues including, among others, grocery store **770** and pizza place **780.** Theater **790** is not in visual cues database **6100,** and hence is not included in the list of visual cues associated with segment 'k'.

PMC **110** also obtains visual cues from captured images, including a grocery store, a pizza place and a theater. After performing the above process of searching for a match, PMC **110** determines a match to grocery store **770** and pizza place **780.** PMC **110** then obtains additional data associated with both grocery store **770** and pizza place **780,** e.g. their exact location and the side of the street. Based on the exact location and the side of the street of stored grocery store **770** and pizza place **780,** and based on the direction of segment 'k' (west), PMC **110** ignores the visual cue of pizza place **780** and modifies navigation route B to pass the grocery store **770.** Visual cues database **6100** can be updated e.g., by updating stored visual cues grocery store **770** and pizza place **780** to include an updated image of the visual cues or by adding theater **790** to the database. The above process continues until reaching library **720.**

As mentioned, navigation route A is selectively modified, meaning parts of navigation route A are modified as illustrated above, to navigation route B, while some parts are not, and the navigation route A remains as determined based on the GPS coordinates. For example the north (last) part of the navigation route A is not modified, and navigation route A passes the same route as navigation B. These parts are in fact identical (such that navigation route B was not created at all, and is shown for the purpose of clarity only).

In some examples, during the navigation itself, the process described above of providing navigation indication based on battery **230** from the current location of the BOV **100** on its way and until reaching library **720** can be repeated and navigation indication can be determined and be provided in the manner described above. Repeating the stages and providing constant indication can be advantageous e.g. in case a navigation route changes along the navigation to reach the destination in a more efficient way, or if it turns out that the current battery power level is not sufficient for navigating to the destination.

Following are details relating to configuring BOV **100** in accordance with certain examples of the presently disclosed subject matter. As mentioned above, according to some examples of the presently disclosed subject matter, the BOV **100** can be configured, e.g. using configuration module **331,** before the BOV **100** starts moving to the destination, but this can also be performed during the movement and the navigation itself. Configuration of the BOV **100** can include configuring any element connected to the BOV **100,** such as configuring the height, length and angle of handle **230,** configuring the angle of the BOV **100** body, with respect to the mobility platform **250,** in order to adjust the center mass position in accordance with the terrain it is moving on, turning on/off lights **260,** setting volume of speaker **240,** influencing speed of the BOV **100,** configuring difference sensors of the BOV **100,** etc. In some examples, configuration can include setting properties of the BOV **100** such as setting the destination or setting starting speed or average speed of the BOV **100.**

In some cases, configuration of the BOV **100** can be carried out manually by operator **130,** e.g. by receiving configuration instructions from operator **130** via touch sensor **234** or microphone **240,** or through a mobile app using communication interface **260.** Alternatively or additionally, configuring the BOV **100** can be carried out automatically, based on sensed data. For example, camera **280** can capture a dark image, based on which PMC **110** using configuration module **331** determines to turn on headlights **260** and/or body LED lights **260.** In some examples, in high temperatures, sensed e.g. by temperature sensor **270** the speed of BOV **100** can be configured, by reducing the average speed in order to refrain from overheating the motors included in wheel mobility platform **250.** Similarly, in low temperatures sensed by temperature sensor **270,** or in case humidity sensors included BOV **100** (not shown in Fig. **2)** detect that it is raining, the speed of BOV **100** can be configured, by increasing the average speed, in order to reach the destination quickly. In some examples, images captured by the camera **280** can be processed. In case a crowded street is recognized, the speed of BOV **100** can be configured by decreasing the average speed, to refrain from start/stop movement due to obstacles, for a smoother experience. The captured images can be processed to recognize an obstacle, such as some pedestrian that is heading the BOV **100** without looking directly ahead but rather is focused on his mobile phone. In such cases, BOV can be stopped from moving, and optionally, flash the lights or honk the horn, or both, in order to get the pedestrian's attention.

Yet, alternatively or additionally, in some cases configuring the BOV **100** can be carried out based on user configurations. In some cases, one or more user configurations are stored, e.g. in memory of PMC **110.** Alternatively or additionally, user configurations can be stored in a remote memory and be communicated to BOV **100** via communication interface **216.** Operator **130** can be identified by the BOV **100,** e.g. using user identification module **332,** in order to configure BOV **100,** based on configurations stored in a user associated with identified operator **130.** Identification of operator **130** in the BOV **100** can be carried out in several manners. For example, visual identification can be carried out using an image captured by camera **280** and using known visual identification methods, fingerprint identification can be done e.g. fingerprint reader **236,** and voice identification can be carried out using microphone **240.** A person versed in the art would realize that other known identification methods can also be applied here. Once operator **130** is identified by the BOV **100,** configuration of the BOV **100** can be carried out based on configurations stored for the identified operator **130.** The stored configuration associated with identified operator **130** can be based on configurations manually updated by operator **130** in a user associated with operator **130** in PMC **110** in the past, or configurations learnt by PMC **110,** e.g. using machine learning techniques, from previous operations of identified operator **130.** For example, operator **130** can manually set a starting speed of BOV **100.** Alternatively, a starting speed of the BOV **100** can be learned from previous operations of the BOV **100** by operator **130.** In such cases, the speed of operator **130** in one or more operations can be monitored, e.g. by monitoring the speed of the BOV **100** in previous operations of identified operator **130.** An average speed can then be calculated, based on the monitored speed, and can be stored for use as a default starting speed of the BOV **100** in the next operation of operator **130,** once identified by the BOV **100.**

Yet another example of configuring properties of the BOV **100** based on configurations of identified operator **130** include suggesting favorite destinations based on learned favorite destinations of operator **130** in previous operations. Learning favorite destinations and providing suggestions to operator **130** can be carried out by location determining module **333.**

In some examples, configuration module **331** can deviate from the configurations stored for an identified operator **130,** by considering some parameters which are relevant for the current route. For example, configuring default speed of the BOV **100** based on default speed of identified operator **130** can consider, in addition to monitored speed of the identified operator **130** in his previous operations, also other parameters, such as the terrain conditions in the current navigation route. For example, if the current route includes a rising slope, the speed of the BOV **100** can be set to be lower than the average speed stored for identified operator **130,** as it can be determined that operator **130** moves slower on a rising slope. Another example of a parameter which can influence the speed is the current hour of the day. If the current operation is during night time, it can be determined that operator **130** moves slower than during day time, and hence the speed of the BOV **100** can be set to be lower.

In some examples, the speed of BOV **100** can be calculated as a function that depends on one or more variables, in addition to or alternative to the adjustment done manually by the operator **130.** The speed function may constantly store the current speed and all the speed function variables values as a set of data. An example of the speed function is as follows:

$$\text{Speed} = F\ (\text{Var}\mathbf{1,}\ \text{Var}\mathbf{2,}\ \text{Var}\mathbf{3,}\ \text{Var}\mathbf{4,..,}\ \text{Varx})$$

where Var**1**, Var**2**, Var**3**, Var**4** include data collected from one or more sensors of BOV **100,** for example, BOV **100** moving angle - uphill or downhill as sensed by gyro and accelerometer, ambient temperature as sensed by temperature sensor **270,** accelerometer sensors included in BOV **100** (not shown in Fig. **2**) for sensing road conditions, with a combination of accelerometer, gyro and wheel's speed sensor, from the wheel sensors, and visual data from the camera **280** such as present light conditions. Any of the above variables can be combined with data received from external data sources, such as Time-of-Day obtained by PMC **110.**

In some examples, the current speed and the speed function variables as depicted above may be collected over time. A speed model may be created and constantly updated for calculating the optimal speed based on the different variables.

It should be noted that the above should not be considered as limiting and other configurations of the BOV **100** are applicable, as known to a person versed in the art.

Bearing the above in mind, reference is now made to Fig. **8** illustrating an example of operations executed while automatically configuring handle **230** of the BOV **100.** As mentioned above, handle **230** includes touch/pressure sensors **234.** Touch/pressure sensors **234** are configured to sense data on pressure points on the handle in order to configure the BOV **100** and handle **230.** At block **810,** data sensed from touch/pressure sensors **234** positioned on handle **230** is received. For example, tactile grip force of operator **130** on handle **230** is sensed for determining the pressure of the grip of operator **130,** e.g. when operator **130** holds handle **230** by one or two hands. Pressure level can be sensed in different rims of handle **230.** Based on received data, a level and type of pressure are determined (block **820**). For example, the level of pressure sensed at different rims of handle **230** can be determined. For example, it can be determined that a high or low level of pressure is sensed in the inner or outer rim of handle **230,** or it can be determined that no pressure is sensed on handle **230.**

Based on the determined level and type of pressure based on sensed data, an automatic action can be taken (block **830**). For example, sensing no pressure on handle **230** can be indicative that operator **130** has stopped moving and, accordingly, it is advisable to stop the movement of the BOV **100** also. Hence, upon determining that there is no pressure on handle **230,** PMC **110** determines to stop the BOV **100** from moving (block **832),** e.g. by sending a suitable signal to wheel mobility platform **250.** Sensing high pressure level in an inner rim of handle **230** may be indicative that operator **130** is moving slower, and, hence, it is advisable to decrease the speed of the BOV **100.** Hence, upon determining that there is a high pressure level on an inner rim of handle **230,** PMC **110** determines that the speed of the BOV **100** should be decreased (block **834).** Similarly, sensing high pressure level on an outer rim of handle **230** may be indicative that operator **130** is moving faster, and, hence, it is advisable to increase the speed of the BOV **100.** Hence, upon determining that there is a high pressure level in an outer rim of handle **230,** PMC **110** determines that the speed of the BOV **100** should be increased (block **836).**

In some cases, based on the sensed level of pressure on handle **230,** in addition to or alternatively to adjusting the speed of the BOV **100,** handle **230** can be also be adjusted, e.g. by changing its height, length and angle. For example, if it is determined that the speed of operator **130** is decreased, since high pressure level in an inner rim of handle **230** has been sensed, it can be determined that the steps of the operator **130** have a shorter stride length, thus the legs of operator **130** may physically be farther from the BOV **100,** in a manner which does not enable operator **130** to continue holding handle **230.** It is therefore advantageous to physically move into the BOV **100** towards operator **130.** This can be achieved e.g. by shortening a telescopic body of handle **230** thus physically moving into the BOV **100** to operator **130** and his legs. In addition, the height and angle of the handle can be adjusted, e.g. by raising them to fit the current standing of operator **130** which now moves at a slower speed. Hence, upon determining a high level of pressure in the inner rim, handle **230** is shortened (block **838).**

If, on the other hand, it is determined that the speed of operator **130** has increased, since high pressure level on an outer rim of handle **230** was sensed, it can be determined that the steps of the operator **130** have a longer stride length, thus the legs of operator **130** may physically be closer to the BOV **100** and may thus be stuck in the BOV **100.** It is therefore advantageous to physically distance the BOV **100** from operator **130.** This can be achieved e.g. by extending the telescopic body of handle **230,** thus physically distancing the BOV **100** from operator **130** and his legs. In addition, the height and angle of the handle **230** can be adjusted, e.g. by lowering them, to fit the current standing of operator **130** who now moves at a higher speed. Hence, upon determining a high level of pressure in the outer rim, handle **230** is lengthened (block **840).**

To illustrate the above, consider the following example. PMC **110** can change the angle of the body of BOV **100** relative to the base of the wheels mobility platform **250,** considering that the angle is somewhere between **180** degrees (in which the sensors of BOV **100** face down) and between **90** to **0** degrees in which the sensors of BOV **100** face up (where **90** degrees means that sensors are straight up and **0** degrees means that sensors are straight down). In case of change of speed the following dual actions can be operated:

1. When speed increases, handle **230** will get longer and the angle of BOV **100** body will be smaller (assuming **90** degrees between BOV **100** body and wheels mobility platform **250** when it is in a normal stand still posture);

2. When speed decreases, handle **230** will shorten and BOV **100** body angle will increase, such that it can move all the way to up right to **90** degrees, but can also grow to **180** degrees which is full folded when sensors face down to the floor.

It may also change the angle when dealing with tilts in the route e.g. going up the stairs may require the BOV **100** body angle to decrease in order to make sure the device will not flip over the operator **130.** Similarly, this may occur when going down stairs. This may also be done as angle of terrain changes.

The above should not be considered as limiting, and a person versed in the art would realize that other examples of how to configure BOV **100** exist.

Also, in some cases, PMC **110** is configured to learn identified operator **130** configuration of the handle position, both for default starting use of operator **130,** and during navigation when route parameters are changed, e.g. change of terrain, hours of the day etc. The learned configuration can be used to automatically configure handle **230** to fit operator **130,** in different states, such as when the speed of operator **130** is increased or decreased, as explained above.

In cases where operator **130** is a visually impaired operator, with low vision capabilities, it is particularly advantageous to automatically adjust handle **230** according to changes in the speed of the visually impaired operator, as illustrated above. However, the disclosure is not limited to a visually impaired operator, and is likewise relevant for all other operators, including for example, athletes using the BOV **100** who often change their movement speed, or regular walkers using the BOV **100.**

The above description has referred to the BOV **100** operated by a battery. The vehicle referenced herein and below is any vehicle capable of navigating from a first location to a second location, irrespective of whether it is operated by a battery, and moreover, irrespective of the battery consumption that is required to navigate the vehicle to a second location, and provide an indication whether it is sufficient. In some examples, the vehicle referenced hereinbelow is the BOV **100** illustrated in Fig. **2** and **3,** while including the elements illustrated in Fig. **2** and **3.** However, it should not be considered as limiting, and the vehicle referenced hereinbelow may, in some cases, include only some functional elements illustrated in Fig. **3,** while lacking one or more functional elements relating to battery consumption, such as battery module **334.** Irrespective of existence of battery **220** in the vehicle referenced hereinbelow, for ease of illustration, the vehicle referenced hereinbelow is referenced as the BOV **100.**

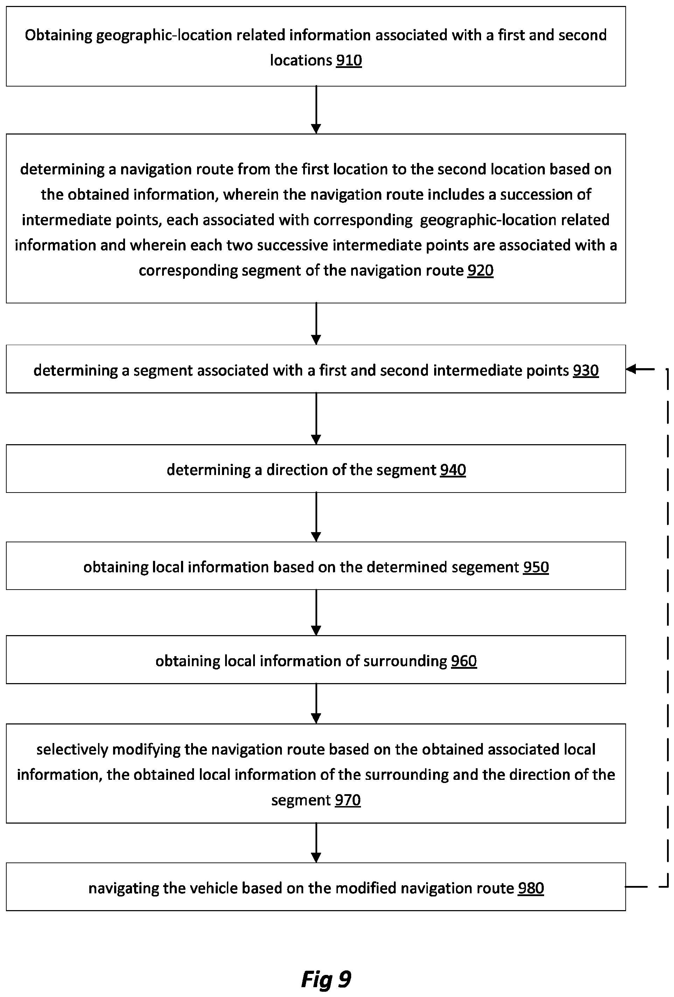

Reference is now being to Fig. **9** showing a flowchart of operations carried out while providing navigation indication of a vehicle (also referred to hereinafter as the BOV **100)** from a first location to a second location, irrespective of the battery consumption of the vehicle during the navigation. The description provided above with reference to Figs. **6a, 6b** and **7** is also relevant for the following description of providing navigation indication of a vehicle.

As explained above, in accordance with certain embodiments of the presently disclosed subject matter, a route is defined as a succession of two or more intermediate points (waypoints). In order to provide navigation indication from a first location to a second location, a succession of two or more intermediate points, between the first location and the second location, are determined. The succession of intermediate points constitute a navigation route.

As further explained above, in some cases, in order to determine a navigation route, geographic-location related information of different types can be used. For example, GPS coordinates can be used to determine the first location, the second location and the intermediate points between the first location and the second location, while local information, such as visual cues, can be used to navigate from a certain intermediate location to the next intermediate location in turn. The advantages presented above of using more than one type of geographic-location related information, such as making the route suitable for pedestrians, or providing a more accurate route for navigation, are also applicable to vehicles which do not include any battery, or to the description of vehicles which do include a battery, but no data on the required consumption level is determined.

Referring to Fig. **9,** in order to provide navigation indication of a vehicle from a first location to a second location, by a computer memory circuitry associated with the vehicle such as PMC **110** illustrated in Fig. **2,** geographic-location related information associated with first and second locations is obtained in a similar manner that has been described above with reference to block **520** in Fig. **5** (block **910).** For example, GPS coordinates can be used to determine a first location and a second location.

As explained above with reference to Fig. **6a,** in some examples, at least some of the geographic-location related information associated with an intermediate point can be discarded and can be selectively filtered out when navigating the route. Filtering out can be done e.g. in cases where the obtained geographic-location related information are positioned on a map and are discarded upon determining that at least some of the geographic-location related information is positioned in a predefined forbidden part of the map. In some examples, defining a forbidden part of a map can be carried out by manually marking forbidden areas on a map.

A navigation route from the first location to the second location based on the obtained information can be determined, wherein the navigation route includes a succession of intermediate points, each associated with corresponding geographic-location related information, and wherein each two successive intermediate points are associated with a corresponding segment of the navigation route (block **920).** PMC **110** then obtains data indicative of first and second intermediate points between the first and the second locations and a segment associated with a first and second intermediate points is then determined (block **930).** In some examples, each of the first and second locations are considered as an intermediate point for the purpose of determining a segment, such that a segment can be determined between the first location and an intermediate location, or between an intermediate location and the second location.

Data indicative of a direction of the segment is also determined, based on the corresponding geographic location related information of the first and second intermediate points associated with the segment (block **940).** For example, a direction between two GPS coordinates associated with two intermediate points can be indicated by cardinal/ intercardinal directions. In some cases, more than one segment and a respective direction is determined, where each segment is determined between two successive intermediate points.

In some cases, based on a determined segment, PMC **110** obtains local information associated with the determined segment (block **950),** in a similar manner to that described above with respect to block **640** in fig. **6a.** For example, PMC **110** retrieves from visual cues database **6100** data indicative of visual cues that are associated with the determined segment.

At block **960,** PMC **110** further obtains local information of the surrounding area, in a similar manner to that described above with respect to block **650** in fig. **6a,** e.g. by capturing one or more images of the surrounding area by one or more cameras **280** illustrated in Fig. **2** and extracting visual cues from the captured images.

In a similar manner to that described above with reference to block **660** in Fig. **6a,** extracted visual cues from captured images are searched for a match with visual cues associated with the segment, as retrieved from visual cues database **6100.** In some examples, if a match is found between a visual cue classified from captured images and a retrieved visual cue, the additional data associated with the retrieved visual cue can assist in determining the location of BOV **100** more accurately. In addition, data indicative of the navigation route of BOV **100** can selectively be modified based on the additional data associated with the extracted visual cue and the direction of the segment, e.g. by modifying at least one portion of the navigation route.

At block **980,** PMC **100** navigates the vehicle based on the modified navigation route.

In some cases, PMC **110** repeats the above process illustrated in blocks **930** to **980,** until reaching the destination.

It is noted that the teachings of the presently disclosed subject matter are not bound by the flow charts illustrated in Figs. **4-6** and **8-9** and that the illustrated operations can occur out of the illustrated order. For example, blocks **420** and **430,** or blocks **630** and **640,** or blocks **940** and **950** shown in succession, can be executed substantially concurrently, or in the reverse order. It is also noted that whilst the flow charts are described with reference to elements of the BOV **100,** this is by no means binding, and the operations can be performed by elements other than those described herein.

It will also be understood that the PMC according to the invention may be, at least partly, implemented on a suitably programmed computer. Likewise, the invention contemplates a computer program being readable by a computer for executing the method of the invention. The invention further contemplates a non-transitory computer-readable memory tangibly embodying a program of instructions executable by the computer for executing the method of the invention.

**Claims**

1. A method for providing navigation indication of a vehicle (100) navigating from a first location to a second location, the method comprising, by a computer memory circuitry (110) associated with the vehicle:

   (a) obtaining data indicative of geographic location related information associated with the first and second locations;
   (b) determining data indicative of a navigation route from the first location to the second location based on the obtained geographic location related information, wherein the data indicative of the navigation route includes data indicative of a succession of at least two intermediate points, wherein each of the at least two intermediate points is associated with corresponding geographic location related information and wherein each two successive intermediate points are associated with a corresponding segment of the navigation route;
   (c) determining data indicative of a segment associated with a first and second intermediate points of the at least two intermediate points;
   (d) determining data indicative of a direction of the segment from the first intermediate point to the second intermediate point, based on their corresponding geographic location related information;
   (e) obtaining data indicative of local information based on the determined direction;

   **characterised by**:

   (f) selectively modifying the data indicative of the navigation route, by modifying at least one part of the navigation route, based on the obtained data indicative of the local information; and
   (g) navigating the vehicle **(100)** based on the modified navigation route;

   wherein obtaining data indicative of geographic location-related information associated with the first location and local information each comprise at least obtaining at least one visual cue extracted from one or more captured images of surrounding environment of the vehicle, searching for a match to a stored visual cue in a visual cue database, and obtaining information on the matched visual cue, wherein the obtained information is indicative of an accurate location of the vehicle.

2. The method of claim 1, wherein obtaining the geographic-location related information further comprises obtaining GPS coordinates associated with the first location and/or the second location.

3. The method of claim 1 or 2, wherein the one or more captured images are: (i) captured by at least one camera included with the vehicle; and/or (ii) received at the vehicle from a user.

4. The method of any one of the preceding claims, wherein the first and/or second intermediate points are identical to the first and/or second locations, respectively.

5. The method of any one of the preceding claims, the method further comprising:
   repeating stages (c) to (g) with respect to at least one different segment, the at least one different segment being between at least one different intermediate point than the first and second intermediate points, until reaching the second location.

6. The method of claim 5, the method further comprising:

(h) repeating stages (a) to (g) where the first location is a current location of the navigated vehicle (100);

(i) prior to navigating the vehicle (100) based on the modified navigation route, selectively filtering out at least some of the obtained geographic location related information associated with the at least one intermediate point upon determining that the associated geographic location related information is in a forbidden area; and

(j) navigating the vehicle (100) from the first location to the second location without the filtered information.

7. The method of claim 6, wherein the geographic location related information associated with the at least one intermediate point includes GPS coordinates, and wherein selectively filtering out comprises:

positioning the GPS coordinates on a map coordinate system; and

discarding at least some of the GPS coordinates upon determining that at least some of the GPS coordinates are positioned in a predefined forbidden part of the map coordinate system.

8. The method of any one of the preceding claims, wherein the method further comprises:
configuring the vehicle (100).

9. The method of claim 8, wherein configuring the vehicle includes adjusting a handle connected to the vehicle (100).

10. The method of claim 8 or 9, wherein configuring the vehicle includes configuring the speed of the vehicle (100).

11. A vehicle (100), comprising:

at least one camera (280), configured to capture one or more images of a surrounding area;

at least one processor included in a processing and memory circuitry (PMC) (110) operatively connected to the one or more cameras (280), the at least one processor being configured to provide navigation indication to a vehicle (100) navigating from a first location to a second location, the at least one processor being configured to:

a) obtain data indicative of geographic-location related information associated with the first location and second location;

b) determine data indicative of a navigation route from the first location to the second location based on the obtained geographic location related information, wherein the data indicative of the navigation route includes data indicative of a succession of at least two intermediate points, wherein each of the at least two intermediate points is associated with corresponding geographic location related information and wherein each two successive intermediate points are associated with a corresponding segment of the navigation route;

c) determine data indicative of a segment associated with first and second intermediate points of the at least two intermediate points;

d) determine data indicative of a direction of the segment from the first intermediate point to the second intermediate point, based on their corresponding geographic-location related information;

e) obtain data indicative of local information based on the determined direction;

**characterised by** the at least one processor being further configured to:

f) selectively modify the data indicative of the navigation route, by modifying at least one part of the navigation route, based on the obtained data indicative of the local information; and

g) navigate the vehicle (100) based on the modified navigation route;

wherein obtaining data indicative of geographic location-related information associated with the first location and local information each comprise at least obtaining at least one visual cue extracted from one or more captured images of surrounding environment of the vehicle, searching for a match to a stored visual cue in a visual cue database, and obtaining information on the matched visual cue, wherein the obtained information is indicative of an accurate location of the vehicle.

12. The vehicle (100) of claim 11, wherein the one or more processors is further configured to configure the vehicle (100).

13. The vehicle (100) of claim 11 or 12, wherein the vehicle further comprises a handle (230), and wherein configuring the vehicle (100) includes adjusting the handle (230).

**14.** The vehicle (100) of any one of claims 11-13, wherein configuring the vehicle (100) includes configuring the speed of the vehicle (100).

**15.** A computer program product comprising a computer readable storage medium retaining program instructions, the program instructions when read by a processor, cause the processor to perform the method of claim 1.

**Patentansprüche**

**1.** Verfahren zum Bereitstellen einer Navigationsanzeige eines Fahrzeugs (100), das von einem ersten Ort zu einem zweiten Ort navigiert, wobei das Verfahren durch eine Computerspeicherschaltung (110), die mit dem Fahrzeug verknüpft ist, umfasst:

(a) Erhalten von Daten, die geografische ortbezogene Informationen anzeigen, die mit dem ersten und zweiten Ort verknüpft sind;
(b) Bestimmen von Daten, die eine Navigationsroute von dem ersten Ort zu dem zweiten Ort anzeigen, auf Grundlage der erhaltenen geografischen ortbezogenen Informationen, wobei die Daten, die die Navigationsroute anzeigen, Daten beinhalten, die eine Abfolge von mindestens zwei Zwischenpunkten anzeigen, wobei jeder der mindestens zwei Zwischenpunkte mit entsprechenden geografischen ortbezogenen Informationen verknüpft ist und wobei jeweils zwei aufeinanderfolgende Zwischenpunkte mit einem entsprechenden Segment der Navigationsroute verknüpft sind;
(c) Bestimmen von Daten, die ein Segment anzeigen, das mit einem ersten und zweiten Zwischenpunkt der mindestens zwei Zwischenpunkte verknüpft ist;
(d) Bestimmen von Daten, die eine Richtung des Segments vom ersten Zwischenpunkt zum zweiten Zwischenpunkt anzeigen, auf Grundlage von ihren entsprechenden geografischen ortsbezogenen Informationen;
(e) Erhalten von Daten, die lokale Informationen auf Grundlage von der bestimmten Richtung anzeigen;

**gekennzeichnet durch**:

(f) selektives Modifizieren der Daten, die die Navigationsroute anzeigen, durch Modifizieren mindestens eines Teils der Navigationsroute auf Grundlage der erhaltenen Daten, die die lokalen Informationen anzeigen; und
(g) Navigieren des Fahrzeugs (100) auf Grundlage der modifizierten Navigationsroute; wobei das Erhalten von Daten, die geografische ortsbezogene Informationen anzeigen, die mit dem ersten Ort assoziiert sind, und lokalen Informationen jeweils mindestens ein Erhalten von mindestens einem visuellen Hinweis umfassen, der aus einem oder mehreren aufgenommenen Bildern der Umgebung des Fahrzeugs extrahiert wurde, Suchen nach einer Übereinstimmung mit einem gespeicherten visuellen Hinweis in einer visuellen Hinweisdatenbank und Erhalten von Informationen über den übereingestimmten visuellen Hinweis, wobei die erhaltenen Informationen einen genauen Ort des Fahrzeugs anzeigen.

**2.** Verfahren nach Anspruch 1, wobei das Erhalten der auf den geographischenortbezogenen Informationen ferner das Erhalten von GPS-Koordinaten umfasst, die mit dem ersten Ort und/oder dem zweiten Ort verknüpft sind.

**3.** Verfahren nach Anspruch 1 oder 2, wobei das eine oder die mehreren aufgenommenen Bilder: (i) von mindestens einer im Fahrzeug enthaltenen Kamera aufgenommen werden; und/oder (ii) von einem Benutzer am Fahrzeug empfangen werden.

**4.** Verfahren nach einem der vorhergehenden Ansprüche, wobei der erste und/oder zweite Zwischenpunkt mit dem ersten bzw. zweiten Ort identisch ist.

**5.** Verfahren nach einem der vorhergehenden Ansprüche, wobei das Verfahren ferner Folgendes umfasst:
Wiederholen der Stufen (c) bis (g) in Bezug auf mindestens ein anderes Segment, wobei das mindestens eine andere Segment zwischen mindestens einem anderen Zwischenpunkt als dem ersten und zweiten Zwischenpunkt liegt, bis zum Erreichen des zweiten Ortes.

**6.** Verfahren nach Anspruch 5, wobei das Verfahren ferner umfasst:

(h) Wiederholen der Schritte (a) bis (g), wobei der erste Ort ein aktueller Ort des navigierten Fahrzeugs (100) ist;
(i) vor dem Navigieren des Fahrzeugs (100) auf Grundlage der modifizierten Navigationsroute, selektives Herausfiltern von mindestens einigen der erhaltenen geografischen ortsbezogenen Informationen, die mit dem mindestens einen Zwischenpunkt verknüpft sind, nachdem bestimmt wird, dass sich die verknüpften geografischen ortsbezogenen Informationen in einem verbotenen Bereich befinden; und

(j) Navigieren des Fahrzeugs (100) von dem ersten Ort zu dem zweiten Ort ohne die gefilterten Informationen.

7. Verfahren nach Anspruch 6, wobei die geografischen ortsbezogenen Informationen, die mit dem mindestens einen Zwischenpunkt verknüpft sind, GPS-Koordinaten beinhalten und wobei das selektive Herausfiltern Folgendes umfasst:

Positionieren der GPS-Koordinaten auf einem Kartenkoordinatensystem; und
Verwerfen mindestens einiger der GPS-Koordinaten, nachdem bestimmt wird, dass mindestens einige der GPS-Koordinaten in einem vordefinierten verbotenen Teil des Kartenkoordinatensystems positioniert sind.

8. Verfahren nach einem der vorhergehenden Ansprüche, wobei das Verfahren ferner Folgendes umfasst: Konfigurieren des Fahrzeugs (100).

9. Verfahren nach Anspruch 8, wobei das Konfigurieren des Fahrzeugs das Einstellen eines mit dem Fahrzeug (100) verbundenen Griffs beinhaltet.

10. Verfahren nach Anspruch 8 oder 9, wobei das Konfigurieren des Fahrzeugs das Konfigurieren der Geschwindigkeit des Fahrzeugs (100) beinhaltet.

11. Fahrzeug (100), umfassend:

mindestens eine Kamera (280), die so konfiguriert ist, dass sie ein oder mehrere Bilder eines umgebenden Bereichs aufnimmt;
mindestens einen Prozessor, der in einer Verarbeitungs- und Speicherschaltung (Processing and Memory Circuitry - PMC) (110) enthalten ist, die betriebswirksam mit der einen oder den mehreren Kameras (280) verbunden ist, wobei der mindestens eine Prozessor dazu konfiguriert ist, Navigationsanzeige für ein Fahrzeug (100) bereitzustellen, das von einem ersten Ort zu einem zweiten Ort navigiert, wobei der mindestens eine Prozessor zu Folgendem konfiguriert ist:

a) Erhalten von Daten, die geografische-ortbezogene Informationen anzeigen, die mit dem ersten Ort und zweiten Ort verknüpft sind;
b) Bestimmen von Daten, die eine Navigationsroute von dem ersten Ort zu dem zweiten Ort anzeigen, auf Grundlage der erhaltenen geografischen ortbezogenen Informationen, wobei die Daten, die die Navigationsroute anzeigen, Daten beinhalten, die eine Abfolge von mindestens zwei Zwischenpunkten anzeigen, wobei jeder der mindestens zwei Zwischenpunkte mit entsprechenden geografischen ortbezogenen Informationen verknüpft ist und wobei jeweils zwei aufeinanderfolgende Zwischenpunkte mit einem entsprechenden Segment der Navigationsroute verknüpft sind;
c) Bestimmen von Daten, die ein Segment anzeigen, das mit ersten und zweiten Zwischenpunkten der mindestens zwei Zwischenpunkte verknüpft ist;
d) Bestimmen von Daten, die eine Richtung des Segments vom ersten Zwischenpunkt zum zweiten Zwischenpunkt anzeigen, auf Grundlage von ihren entsprechenden geographischen-ortsbezogenen Informationen;
e) Erhalten von Daten, die lokale Informationen auf Grundlage von der bestimmten Richtung anzeigen;

**dadurch gekennzeichnet, dass** der mindestens eine Prozessor ferner zu Folgendem konfiguriert ist:

f) selektives Modifizieren der Daten, die die Navigationsroute anzeigen, durch Modifizieren mindestens eines Teils der Navigationsroute auf Grundlage der erhaltenen Daten, die die lokalen Informationen anzeigen; und
g) Navigieren des Fahrzeugs (100) auf Grundlage der modifizierten Navigationsroute;

wobei das Erhalten von Daten, die geografische ortsbezogene Informationen anzeigen, die mit dem ersten Ort assoziiert sind, und lokalen Informationen jeweils mindestens ein Erhalten von mindestens einem visuellen Hinweis umfassen, der aus einem oder mehreren aufgenommenen Bildern der Umgebung des Fahrzeugs extrahiert wurde, Suchen nach einer Übereinstimmung mit einem gespeicherten visuellen Hinweis in einer visuellen Hinweisdatenbank und Erhalten von Informationen über den übereingestimmten visuellen Hinweis, wobei die erhaltenen Informationen einen genauen Ort des Fahrzeugs anzeigen.

12. Fahrzeug (100) nach Anspruch 11, wobei der eine oder die mehreren Prozessoren ferner dazu konfiguriert sind, das Fahrzeug (100) zu konfigurieren.

13. Fahrzeug (100) nach Anspruch 11 oder 12, wobei das Fahrzeug ferner einen Griff (230) umfasst und wobei das Konfigurieren des Fahrzeugs (100) das Einstellen des Griffs (230) beinhaltet.

14. Fahrzeug (100) nach einem der Ansprüche 11-13, wobei das Konfigurieren des Fahrzeugs (100) das Konfigurieren der Geschwindigkeit des Fahrzeugs (100) beinhaltet.

15. Computerprogrammprodukt, umfassend ein computerlesbares Speichermedium, das Programmanweisungen hält, wobei die Programmanweisungen, wenn sie von einem Prozessor gelesen werden, den Prozessor veranlassen, das Verfahren nach Anspruch 1 durchzuführen.

**Revendications**

1. Procédé destiné à fournir une indication de navigation d'un véhicule (100) navigant d'une première position à une seconde position, le procédé comprenant, par une circuiterie de mémoire d'ordinateur (110) associée au véhicule :

   (a) l'obtention de données indicatives d'informations de position géographique associées aux première et seconde positions ;
   (b) la détermination de données indicatives d'un itinéraire de navigation de la première à la seconde position sur la base des informations de position géographique obtenues, les données indicatives de l'itinéraire de navigation comprenant des données indicatives d'une succession d'au moins deux points intermédiaires, chacun des deux points intermédiaires au moins étant associé aux informations de position géographique correspondantes et chacun des deux points intermédiaires successifs étant associé à un segment correspondant de l'itinéraire de navigation ;
   (c) la détermination de données indicatives d'un segment associé aux premier et second points intermédiaires des au moins deux points intermédiaires ;
   (d) la détermination de données indicatives d'une direction du segment du premier point intermédiaire au second point intermédiaire, sur la base de leurs informations de position géographique correspondantes ;
   (e) l'obtention de données indicatives d'informations locales sur la base de la direction déterminée ;

   **caractérisé par** :

   (f) la modification, de façon sélective, des données indicatives de l'itinéraire de navigation, en modifiant au moins une partie de l'itinéraire de navigation, sur la base des données obtenues indicatives des informations locales ; et
   (g) la navigation du véhicule (100) sur la base de l'itinéraire de navigation modifié ; l'obtention des données indicatives des informations de position géographique associées à la première position et aux informations locales comprenant au moins l'obtention d'au moins un repère visuel extrait d'une ou plusieurs images capturées du milieu environnant du véhicule, la recherche d'une correspondance avec un repère visuel stocké dans une base de données de repères visuels, et l'obtention d'informations sur le repère visuel correspondant, les informations obtenues étant indicatives d'une position précise du véhicule.

2. Procédé selon la revendication 1, l'obtention des informations de position géographique comprenant en outre l'obtention des coordonnées GPS associées à la première position et/ou à la seconde position.

3. Procédé selon la revendication 1 ou 2, la ou les images capturées étant : (i) capturées par au moins une caméra présente dans le véhicule ; et/ou (ii) reçues au niveau du véhicule de la part d'un utilisateur.

4. Procédé selon l'une quelconque des revendications précédentes, les premier et/ou second points intermédiaires étant identiques, respectivement, aux première et/ou seconde positions.

5. Procédé selon l'une quelconque des revendications précédentes, comprenant en outre :

la répétition des étapes c) à g) par rapport à au moins un segment différent, l'au moins un segment différent étant situé entre au moins un point intermédiaire différent des premier et second points intermédiaires, jusqu'à ce que l'on atteigne la seconde position.

6. Procédé selon la revendication 5, le procédé comprenant en outre :

(h) la répétition des étapes a) à g), où la première position est la position actuelle du véhicule ayant navigué (100) ;
(i) avant la navigation du véhicule (100) sur la base de l'itinéraire de navigation modifié, le filtrage, de façon sélective, d'au moins certaines des informations de position géographique obtenues associées à l'au moins un point intermédiaire en déterminant que les informations de position géographique associées se trouvent dans une zone interdite ; et
(j) la navigation du véhicule (100) de la première position à la seconde position sans les informations filtrées.

7. Procédé selon la revendication 6, les informations de position géographique associées à l'au moins un point intermédiaire comprennent des coordonnées GPS, et le filtrage, de façon sélective, comprenant :

le positionnement des coordonnées GPS sur un système de coordonnées cartographiques ; et
le rejet au moins de certaines des coordonnées GPS après avoir déterminé qu'au moins certaines des coordonnées GPS sont positionnées dans une partie interdite prédéfinie du système de coordonnées cartographiques.

8. Procédé selon l'une quelconque des revendications précédentes, le procédé comprenant en outre :
la configuration du véhicule (100).

9. Procédé selon la revendication 8, la configuration du véhicule comprenant le réglage d'une poignée reliée au véhicule (100).

10. Procédé selon la revendication 8 ou 9, la configuration du véhicule comprenant la configuration de la vitesse du véhicule (100).

11. Véhicule (100) comprenant :

au moins une caméra (280), configurée pour capturer une ou plusieurs images d'une zone environnante ;
au moins un processeur inclus dans une circuiterie de traitement et de mémoire (PMC) (110) reliée de manière fonctionnelle à une ou plusieurs caméras (280), l'au moins un processeur étant configuré pour fournir une indication de navigation à un véhicule (100) naviguant d'une première position à une seconde position, l'au moins un processeur étant configuré pour :

a) obtenir des données indicatives d'informations de position géographique associées à la première et à la seconde position ;
b) déterminer les données indicatives d'un itinéraire de navigation de la première position à la seconde position sur la base des informations de position géographique obtenues, les données indicatives de l'itinéraire de navigation comprenant des données indicatives d'une succession d'au moins deux points intermédiaires, chacun des deux points intermédiaires au moins étant associé aux informations de position géographique correspondantes et chacun des deux points intermédiaires successifs étant associé à un segment correspondant de l'itinéraire de navigation ;
c) déterminer des données indicatives d'un segment associé aux premier et second points intermédiaires des au moins deux points intermédiaires ;
d) déterminer des données indicatives d'une direction du segment du premier point intermédiaire au second point intermédiaire, sur la base des informations de position géographique correspondantes ;
e) obtenir des données indicatives des informations locales sur la base de la direction déterminée ;

**caractérisé par le fait que** l'au moins un processeur est en outre configuré pour :

f) modifier sélectivement les données indicatives de l'itinéraire de navigation, en modifiant au moins une partie de l'itinéraire de navigation, sur la base des données obtenues indicatives des informations locales ; et
g) faire naviguer le véhicule (100) sur la base de l'itinéraire de navigation modifié ;

l'obtention de données indicatives des informations de position géographique associées à la première position et aux informations locales comprenant au moins l'obtention d'au moins un repère visuel extrait d'une ou plusieurs images capturées du milieu environnant du véhicule, la recherche d'une correspondance avec un repère visuel stocké dans une base de données de repères visuels et l'obtention d'informations sur le repère visuel correspondant, les informations obtenues étant indicatives d'une position précise du véhicule.

12. Véhicule (100) selon la revendication 11, un ou plusieurs processeurs étant en outre configurés pour configurer le véhicule (100).

13. Véhicule (100) selon la revendication 11 ou 12, le véhicule comprenant en outre une poignée (230), et la configuration du véhicule (100) comprenant le réglage de la poignée (230).

14. Véhicule (100) selon l'une quelconque des revendications 11-13, la configuration du véhicule (100) comprenant la configuration de la vitesse du véhicule (100).

15. Produit de programme informatique comprenant un support de stockage lisible par ordinateur contenant des instructions de programme, les instructions de programme, lorsqu'elles sont lues par un processeur, amenant le processeur à exécuter le procédé selon la revendication 1.

**Fig 1**

**100**

**130**

Vibration motors
**232**
touch/pressure
sensors **234**

fingerprint reader **236**

handle 230

temperature and
light sensor **270**

communication interface
**216**

GPS **210**

Headlights **260**

camera **280**

processor and memory
circuitry **110**

speaker and horn
**240**

Speaker and
microphone
**240**

Battery **220**

LIDAR and RF Radars
272

body LED light **260**

proximity sensors
**290**

6 wheel mobility
platform **250**

*Fig 2*

battery-operating vehicle (BOV) 100

Processor and memory circuitry (PMC) 110

configuration module 331

adjusting handle module 336

calculation route module 335

location determining module 333

User identification module 332

battery module 334

communication interface 216

battery 220

Handle 230

vibration motors 232

touch/pressure sensors 234

fingerprint reader 236

*Fig 3*

400

obtaining first and second locations 410

↓

determining required battery power consumption
420

↓

obtaining current power level of the battery 430

↓

comparing the required battery power consumption
to the current power level of the battery 440

↓

providing an indication based on the determination
450

repeating stages for
providing navigation
indication from
current location of the
vehicle to the second
location 462

determining an
insufficient remaining
battery power status
452

← No ← sufficient remaining
battery power? → Yes →

determining a
sufficient remaining
battery power status
456

↓

generating a signal for
disabling operation of
the BOV 454

generating a signal for
enabling operation of
the BOV 458

↓

navigating the BOV
460

*Fig 4*

obtaining first and second locations 410

> obtaining geographic-location related information 510

determining required battery power consumption 420

> determining a navigation route from the first location to the second location based on the obtained information 520

> obtaining information on determined navigation route 530

> determining the required battery power consumption based on the obtained information 540

obtaining current power level of the battery 430

comparing the required battery power consumption to the current power level of the battery 440

providing an indication based on the determination 450

*Fig 5*

navigating the BOV <u>460</u>

obtaining data indicative of at least one intermediate point 610

determining a segment associated with a first and second intermediate points <u>620</u>

determining a direction of the segment <u>630</u>

obtaining local information associated with the determined segment <u>640</u>

obtaining local information of surrounding <u>650</u>

selectively modifying the navigation route based on the obtained associated local information, the obtained local information of the surrounding and the direction of the segment <u>660</u>

navigating the BOV based on the modified navigation route <u>670</u>

*Fig 6 a*

PMC 110

Memory 6000

visual cues database 6100

VC 1

* ID XX1
* GPS coordinates YY1
* Image
* segmentation in image ZZ 1
* Date of last confirmation DD 1
* ...

VC 2

* ID XX2
* GPS coordinates YY2
* Image
* segmentation in image ZZ 2
* Date of last confirmation DD 2
* ...

VC 3 ...

VC 4 ...

...

*Fig 6 b*

*Fig 7*

receiving sensed data from pressure points on handle **810**

determining level and type of pressure based on sensed data **820**

taking an action **830**

stopping BOV upon determining that there is no pressure **832**

decreasing the speed of BOV upon determining high level of pressure in inner rim **834** → shortening handle of BOV **838**

increasing the speed of BOV upon determining high level of pressure in outer rim **836** → lengthening handle of BOV **840**

*Fig 8*

Obtaining geographic-location related information associated with a first and second locations 910

↓

determining a navigation route from the first location to the second location based on the obtained information, wherein the navigation route includes a succession of intermediate points, each associated with corresponding geographic-location related information and wherein each two successive intermediate points are associated with a corresponding segment of the navigation route 920

↓

determining a segment associated with a first and second intermediate points 930

↓

determining a direction of the segment 940

↓

obtaining local information based on the determined segement 950

↓

obtaining local information of surrounding 960

↓

selectively modifying the navigation route based on the obtained associated local information, the obtained local information of the surrounding and the direction of the segment 970

↓

navigating the vehicle based on the modified navigation route 980

*Fig 9*

**REFERENCES CITED IN THE DESCRIPTION**

**Patent documents cited in the description**

- US 2014244159 A1
- US 2017314954 A1